# EUROPEAN PATENT SPECIFICATION

(11) **EP 4 171 002 B1**
(45) Date of publication and mention of the grant of the patent: **02.04.2025**
(21) Application number: 22830117.2
(22) Date of filing: 22.08.2022
(51) Int. Cl.: H04N 23/667, H04N 23/63, H04N 5/76, H04N 1/21, H04N 23/84, H04N 23/951, H04N 23/80, H04N 5/77

(54) **METHOD FOR IMAGE SNAPSHOT IN VIDEO RECORDING, AND ELECTRONIC DEVICE**
VERFAHREN FÜR BILDSCHNAPPSCHUSS BEI DER VIDEOAUFZEICHNUNG UND ELEKTRONISCHE VORRICHTUNG
PROCÉDÉ D'INSTANTANÉ D'IMAGE DANS UN ENREGISTREMENT VIDÉO, ET DISPOSITIF ÉLECTRONIQUE

(30) Priority: 07.09.2021 CN 202111045833; 03.12.2021 CN 202111468023
(43) Date of publication of application: 26.04.2023
(73) Proprietor: Honor Device Co., Ltd., Shenzhen, Guangdong 518040 (CN)
(72) Inventor: XIAO, Bin, Shenzhen, Guangdong 518040 (CN); WANG, Yu, Shenzhen, Guangdong 518040 (CN); ZHU, Congchao, Shenzhen, Guangdong 518040 (CN)
(74) Representative: Epping - Hermann - Fischer
(86) International application number: PCT/CN2022/113985
(87) International publication number: WO 2023/035921

(56) References cited:
- CN-A- 1 972 413
- CN-A- 102 395 017
- CN-A- 105 635 614
- CN-A- 107 205 116
- CN-A- 110 290 323
- CN-A- 113 228 620
- US-A1- 2010 309 335
- US-A1- 2013 208 143
- US-A1- 2013 222 629
- US-A1- 2013 271 621
- US-A1- 2014 104 455
- US-A1- 2016 037 067
- US-A1- 2020 221 008

## Description

### TECHNICAL FIELD

This application relates to the field of photographing technologies, and in particular, to a method for capturing an image during video recording and an electronic device.

### BACKGROUND

Existing mobile phones generally have photographing and video recording functions, and a growing quantity of people use the mobile phones to take photos and videos to record every bits and pieces of life. In a process of recording a video (namely, a video recording process), the mobile phone may collect some wonderful images. In the video recording process of the mobile phone, the user may expect the mobile phone to capture the wonderful images and save the wonderful images as photos for displaying to the user. Therefore, a solution in which an image can be captured in a video recording process is urgently needed.

US 2020/221008 A1 describes a method for a zero shutter-lag mode of an image capture device. For example, a camera includes a shutter button for snapping pictures. A timestamp can be associated with each preview image. The preview image that is associated with the timestamp that is closest to the timestamp of a shutter press event can be used as the image captured by a user.

US 2013/208143 A1 describes an image fetching system that separate data paths for generating preview frames, for generating video frames, and for generating encoded camera frames. For a zero shutter lag, camera frames marked by (t-4), (t-3), (t-2), (t-1), t, (t+1), (t+2), (t+3) are consecutively buffered. When a camera event is triggered and received at moment t, the camera frame marked by the moment t under a single camera shot mode are retrieved, or a plurality of camera frames marked by the moments t, (t+1), (t+2) and (t+3) under an auto burst mode are retrieved.

US 2013/222629 A1 describes a method for concurrent video recording and still image capture. A multi-function mobile computing device is configured to save a raw Bayer captured by a camera of the device, and process the raw Bayer after conclusion of a video recording session.

US 2013/271621 A1 describes a method for capturing an image or motion images at a correct timing without shutter lag in a camera device. The camera device buffers candidate capture images and records a shutter lag-compensated capture image in response to a capture request.

US 2010/309335 A1 describes an image capturing method including that, in response to a user request to capture an image, automatically selecting one of buffered images based on an exposure time and optionally an image quality parameter.

### SUMMARY

This application provides a method for capturing an image during video recording and an electronic device, so that an image can be captured in a video recording process and image quality of a captured image can be improved.

To achieve the foregoing objective, the following technical solutions are used in the embodiments of this application:
According to a first aspect, this application provides a method, as defined in appended claim 1, for capturing an image during video recording, and the method may be applied to an electronic device. The method includes: The electronic device may receive a first operation of a user, where the first operation is used to trigger the electronic device to start recording a video. A camera of the electronic device collects a first image in response to the first operation, and the electronic device displays a first screen, where the first screen is a viewfinder screen on which the electronic device is recording the video, the first screen includes a snapshot shutter and a preview image obtained based on the first image, and the snapshot shutter is configured to trigger the electronic device to capture an image to obtain a photo. The electronic device may buffer, in a first buffer queue, the first image collected by the camera, where n frames of first images collected by the camera are buffered in the first buffer queue, n≥ 2, and n is an integer.

Then, the electronic device may select, based on additional information of the first image in response to a second operation performed by the user on the snapshot shutter, a second image from the n frames of first images buffered in the first buffer queue, where the additional information of the first image includes at least one of contrast of the first image, and an angular velocity at which the camera collects the first image. Finally, the electronic device may run a preset RAW domain image processing algorithm, by using m frames of first images that are in the n frames of first images and that include the second image as an input, to obtain a third image, and encode the third image to generate a captured photo, where m≥2, m is an integer, and the preset RAW domain image processing algorithm has a function of improving image quality.

On the one hand, in an embodiment of this application, the electronic device (for example, the electronic device) may buffer a Bayer image exposed and output by an image sensor (Sensor) in the first buffer queue (Buffer). The Bayer image may be buffered in the Buffer. In this case, even if there is delay duration (for example, 120 ms-160 ms) from receiving a capture operation of the user to receiving a capture instruction by a snapshot program, in the delay duration, a frame output by the sensor can be buffered in the Buffer. Therefore, when the electronic device receives the capture operation of the user, a Bayer image output by the sensor can be further buffered in the first buffer queue. In addition, image content of the frame output by the sensor will not change much in a short time. In this case, a frame selection module of the electronic device may select, as a captured image, one frame of image with good image quality from the Buffer based on additional information of the image buffered in the Buffer. In this way, image quality of the captured image can be improved.

On the other hand, the electronic device may further process, by using a preset RAW domain AI image enhancement algorithm model (briefly referred to as a preset RAW domain image processing algorithm), a captured frame selected by the frame selection module. Finally, an encoder encodes a processing result to obtain the captured photo. The preset RAW domain image processing algorithm is a deep learning network for image quality enhancement in a RAW domain. In this solution, the preset RAW domain image processing algorithm can be used to improve image quality of the captured frame.

In conclusion, according to the method in this application, an image that meets a user requirement can be captured in a video recording process, and the image quality of the captured image can be improved.

In the design method of the first aspect, n≥2. In other words, a plurality of frames of first images may be buffered in the first buffer queue. In this case, even if there is delay duration (for example, 120 ms-160 ms) from receiving a capture operation of the user to receiving a capture instruction by a snapshot program, in the delay duration, a frame output by the sensor can be buffered in the Buffer. Therefore, when the electronic device receives the capture operation of the user, a Bayer image output by the sensor can be further buffered in the first buffer queue. In addition, image content of the frame output by the sensor will not change much in a short time. In this case, a frame selection module of the electronic device may select, as a captured image, one frame of image with good image quality from the Buffer based on additional information of the image buffered in the Buffer. In this way, image quality of the captured image can be improved.

In another possible design method of the first aspect, m≥2. Specifically, the electronic device may run the preset RAW domain image processing algorithm by using the plurality of frames of first images as an input. It should be understood that images in the m frames of first images other than the second image may play a role of image quality enhancement on the second image. This makes it easy to obtain information such as noise and a texture, to further improve image quality of the second image.

In another possible design method of the first aspect, the additional information of the first image includes the contrast of the first image, and the contrast of the first image is used to represent a definition of the first image. The second image is a first image with highest contrast among the n frames of first images buffered in the first buffer queue.

Higher contrast of the first image indicates a higher definition of the first image. In this design method, the electronic device may select an image with a highest definition from the n frames of first images as the second image (namely, an alternative captured image). In this way, the image quality of the captured image is improved.

In another possible design method of the first aspect, the additional information of the first image includes the angular velocity at which the camera collects the first image, and the angular velocity is used to represent a jitter situation in which the camera collects the first image. The second image is a first image with a minimum angular velocity in the n frames of first images buffered in the first buffer queue.

A greater angular velocity at which the camera collects the first image indicates a higher jitter at which the camera collects the first image. A smaller angular velocity at which the camera collects the first image indicates a lower jitter at which the camera collects the first image. It should be understood that the lower jitter at which the camera collects the first image indicates clearer image quality of the first image, and the higher jitter at which the camera collects the first image indicates blurrier image quality of the first image. In this design method, the electronic device may select an image with a minimum jitter from the n frames of first images as the second image (namely, the alternative captured image). In this way, the image quality of the captured image is improved. In another possible design method of the first aspect, the additional information of the first image further includes a timestamp of the first image, each frame of first image includes a timestamp, and the timestamp records a time at which the image sensor of the electronic device outputs a corresponding first image. A clock of an upper-layer application in the electronic device is synchronized with a clock of the image sensor that records output of the first image, or the clock of the upper-layer application in the electronic device and the clock of the image sensor that records output of the first image are a same system clock. The second image is a first image that is in the n frames of first images buffered in the first buffer queue and whose time recorded by the timestamp is closest to a time at which the electronic device receives the second operation.

It may be understood that, if there is one first image whose time recorded by the timestamp is closest to the time at which the electronic device receives the second operation, it indicates a higher probability that the first image is an image that the user needs to capture. Therefore, the electronic device uses, as the second image, the first image whose time recorded by the timestamp is closest to the time at which the electronic device receives the second operation. This makes it easy to capture image content that the user really needs.

In another possible design method of the first aspect, the m frames of first images are adjacent m frames of images. Image content of the adjacent images has a higher similarity. Therefore, image quality enhancement is performed on the second image by using the adjacent m frames of images, which makes it easy to improve the image quality of the second image.

In another possible design method of the first aspect, before the electronic device buffers, in a first buffer queue, the first image collected by the camera, the electronic device may count the additional information of the first image when reading each frame of first image output by the image sensor of the electronic device by using an image processor ISP, and write the additional information of the first image into metadata of the first image.

In this design method, before buffering the first image to the first buffer queue, the ISP may write the additional information of the first image into the metadata of the first image.

In another possible design method of the first aspect, after the electronic device buffers, in a first buffer queue, the first image collected by the camera, the electronic device may count the additional information of the first image when reading each frame of first image buffered in the first buffer queue by using an image processor ISP, and write the additional information of the first image into metadata of the first image.

In this design method, after buffering the first image to the first buffer queue, the ISP may write the additional information of the first image into the metadata of the first image.

According to a second aspect, this application provides an electronic device, and the electronic device includes a touchscreen, a memory, a camera, a display, and one or more processors. The touchscreen, the memory, the camera, and the display are coupled to the processor. The memory stores computer program code, and the computer program code includes computer instructions. When the computer instructions are executed by the processor, the electronic device is enabled to perform the method according to any one of the first aspect or the possible design methods thereof. According to a third aspect, this application provides a computer-readable storage medium. The computer-readable storage medium includes computer instructions. When the computer instructions are run on an electronic device, the electronic device is enabled to perform the method according to any one of the first aspect or the possible design methods thereof.

According to a fourth aspect, this application provides a computer program product. When the computer program product runs on a computer, the electronic device is enabled to perform the method according to any one of the first aspect or the possible design methods thereof. The computer may be the foregoing electronic device.

It can be understood that, for beneficial effects that can be achieved by the electronic device according to the second aspect, and the possible design methods thereof, the computer storage medium according to the third aspect, and the computer program product according to the fourth aspect, reference may be made to the beneficial effects of any one of the first aspect or the possible design methods thereof. Details are not described herein again.

### BRIEF DESCRIPTION OF DRAWINGS

FIG. 1 is a processing flowchart in which an sensor outputs an image, and an ISP and an encoder process the image to obtain a high-definition image;
FIG. 2 is a schematic diagram of a video viewfinder screen of a mobile phone according to an embodiment of this application;
FIG. 3 is a schematic diagram of delay duration from receiving a capture operation by a mobile phone to receiving a capture indication by a sensor according to an embodiment of this application;
FIG. 4 is a functional block diagram of a method for capturing an image during video recording according to an embodiment of this application;
FIG. 5A is a schematic diagram of a hardware structure of a mobile phone according to an embodiment of this application;
FIG. 5B is a schematic diagram of a software architecture of a mobile phone according to an embodiment of this application;
FIG. 6 is a flowchart of a method for capturing an image during video recording according to an embodiment of this application;
FIG. 7A-FIG. 7B are a schematic diagram of a display interface of a mobile phone according to an embodiment of this application;
FIG. 8A is a schematic diagram of a functional module of an ISP according to an embodiment of this application;
FIG. 8B is a functional block diagram of another method for capturing an image during video recording according to an embodiment of this application;
FIG. 8C is a functional block diagram of another method for capturing an image during video recording according to an embodiment of this application;
FIG. 9A is a schematic diagram of a first buffer queue according to an embodiment of this application;
FIG. 9B is a functional block diagram of performing image processing by using a preset RAW domain image processing algorithm according to an embodiment of this application;
FIG. 10A-FIG. 10B are a schematic diagram of another display interface of a mobile phone according to an embodiment of this application;
FIG. 11 is a schematic diagram of another display interface of a mobile phone according to an embodiment of this application;
FIG. 12 is a schematic diagram of another display interface of a mobile phone according to an embodiment of this application;
FIG. 13 is a schematic diagram of another display interface of a mobile phone according to an embodiment of this application;
FIG. 14 is a schematic diagram of another display interface of a mobile phone according to an embodiment of this application; and
FIG. 15 is a schematic diagram of a structure of a chip system according to an embodiment of this application.

### DESCRIPTION OF EMBODIMENTS

In the following, the terms "first" and "second" are used for descriptive purposes only, and cannot be construed as indicating or implying relative importance or implicitly indicating a quantity of technical features indicated. Therefore, a feature defined as "first" or "second" may explicitly or implicitly include one or more of the features. In the description of embodiments, unless otherwise stated, "a plurality of" means two or more.

Currently, in a video recording process of a mobile phone, an image sensor (Sensor) of the mobile phone is controlled by exposure, so that Bayer (Bayer) images can be continuously output. Each frame of Bayer image is processed by using an image signal processor (image signal processor, ISP) of the mobile phone, and then encoded by using an encoder (ENCODER). In this way, a video stream can be obtained.

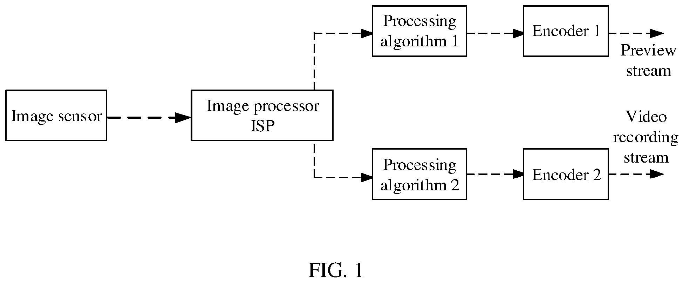

FIG. 1 shows a processing procedure of a preview stream and a video recording stream in a mobile phone after an image sensor (Sensor) outputs an image in a video recording process of the mobile phone. The preview stream is a video stream presented to a user on a display in the video recording process of the mobile phone. The video recording stream is a video stream stored in the mobile phone for the user to view after video recording stops.

As shown in FIG. 1, after the image sensor outputs the image, the ISP may perform image processing on the image. After the image processing is performed by the ISP, the image may be divided into two data streams. One data stream is processed by using a processing algorithm 1 shown in FIG. 1, and then may be encoded by an encoder 1 to obtain the preview stream. The other data stream is processed by using a processing algorithm 2 shown in FIG. 1, and then may be encoded by an encoder 2 to obtain the video recording stream.

The processing algorithm 1 may also be referred to as a post-processing algorithm of the preview stream, and the processing algorithm 2 may also be referred to as a post-processing algorithm of the video recording stream. The processing algorithm 1 and the processing algorithm 2 may include processing functions such as anti-jitter processing, denoising processing, blurring processing, color adjustment, and brightness adjustment.

It should be noted that a manner in which the mobile phone processes the preview stream and the video recording stream in the video recording process includes, but is not limited to, the manner shown in FIG. 1. For example, after the image sensor outputs the image, the ISP may perform a part of image processing (such as image processing in a "RAW domain" and image processing in an "RGB domain") on the image. Then, the image may be divided into two data streams. One data stream is processed by using a processing algorithm 1, then another part of image processing (for example, image processing in a "YUV domain") is performed by the ISP, and then an obtained image may be encoded by an encoder 1 to obtain the preview stream. The other data stream is processed by using a processing algorithm 2, then another part of image processing (for example, the image processing in the "YUV domain") is performed by the ISP, and then an obtained image may be encoded by the encoder 2 obtain the video recording stream. In the following embodiment, the processing manner of the preview stream and the video recording stream shown in FIG. 1 is used as an example to describe a method in the embodiments of this application.

It should be noted that the sensor outputs the image, and the ISP and the encoder (namely, the ENCODER, for example, the encoder 1 and the encoder 2) process the image, so as to record a video. Therefore, data streams (such as the preview stream and the video recording stream) in a whole process in which the sensor outputs the image and the ISP and the encoder (ENCODER) process the image can be referred to as the video stream.

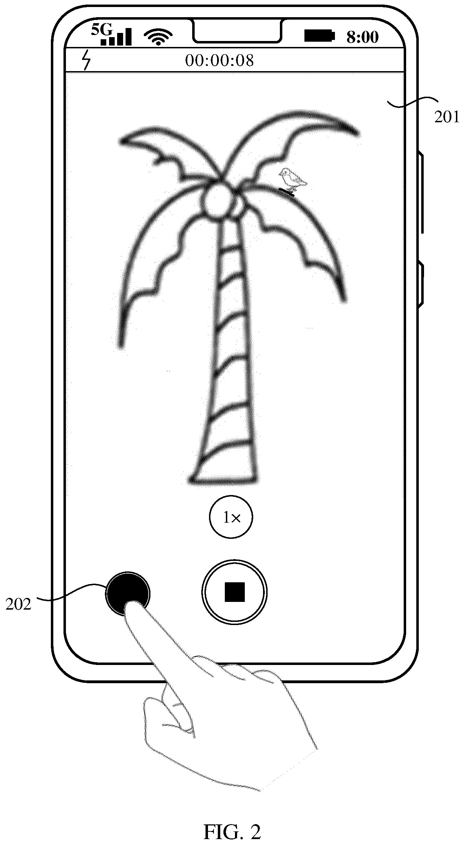

In the video recording process of the mobile phone, the mobile phone can capture an image in response to an operation of the user. For example, the mobile phone may display a video viewfinder screen 201 shown in FIG. 2. The video viewfinder screen 201 includes a snapshot shutter 202, and the snapshot shutter 202 is configured to trigger the mobile phone to capture an image in the video recording process and save the image as a photo. The mobile phone may capture the image in response to a tap operation performed by the user on the snapshot button 202 shown in FIG. 2. The user expects the mobile phone to capture an image collected by a camera at a moment when the user taps the snapshot shutter 202.

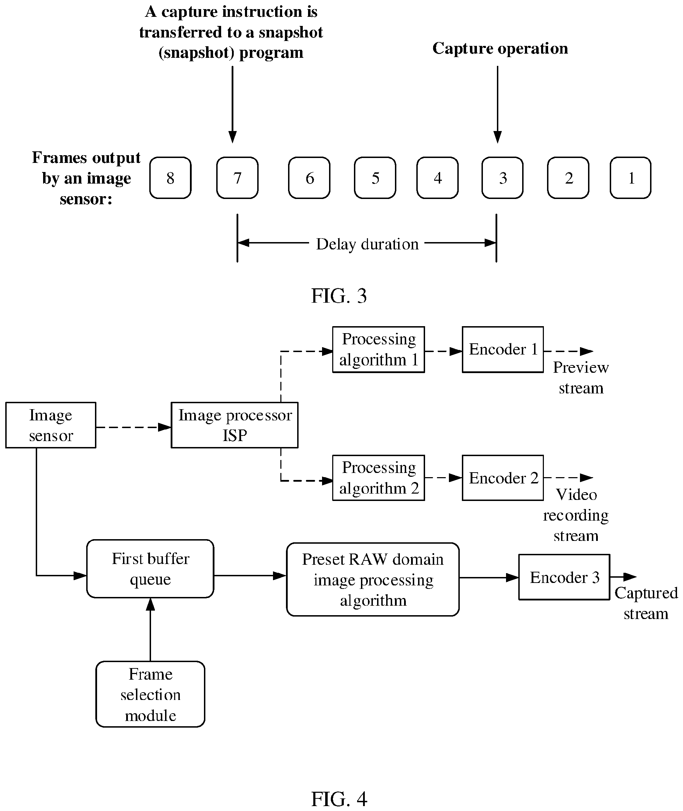

To capture the image during video recording of the mobile phone, in some technical solutions, when the sensor of the mobile phone receives a capture instruction, a 1^{st} frame of collected image may be used as a captured image (for example, a 7^{th} frame of image shown in FIG. 3). However, after an upper-layer application (a camera application corresponding to the video viewfinder screen 201 shown in FIG. 2) receives a capture operation of the user (for example, the tap operation performed by the user on the snapshot shutter 202), it takes time (for example, delay duration shown in FIG. 3) to transmit the capture instruction to a snapshot (Snapshot) program. During this period (for example, the delay duration shown in FIG. 3), the sensor continues to output Bayer images. Therefore, from receiving the capture operation of the user by the upper-layer application to receiving the capture instruction by the snapshot program, the sensor may output a plurality of frames of Bayer images.

For example, as shown in FIG. 3, it is assumed that when the image sensor (Sensor) outputs a 3^{rd} frame of Bayer image, the upper-layer application receives the capture operation, and when the sensor outputs the 7^{th} frame of Bayer image, the capture instruction is transferred to the snapshot program. In this case, if the solution in the conventional technology is used, because of the delay duration shown in FIG. 3, the 7^{th} frame of image is not the frame of image at the moment when the user taps the snapshot shutter 202. The frame of image that the user really needs cannot be captured by using this solution. It should be noted that, in eight frames of images shown in FIG. 3, a 1^{st} frame of image is the earliest frame of image output by the sensor, and an 8^{th} frame of image is the latest frame of image output by the sensor. The image sensor (Sensor) may sequentially expose and output the eight frames of images shown in FIG. 3 starting from the 1^{st} frame of image.

In some other embodiments, the mobile phone may capture, as the captured image, a frame of image that is in the video streams (such as the preview stream and the video recording stream) and that is collected by the user at a capture moment, and save the captured image as a photo to display to the user.

However, in the video recording process of the mobile phone, a large quantity of images (for example, 30 frames of images) need to be processed per second. In this case, an operation resource and time that are reserved for each frame of image are limited. Therefore, the mobile phone can usually use a hardware processing module of the ISP to process the video stream in a simple processing manner, instead of using a complex algorithm to improve image quality (for example, denoising and brightening). Such an image processing effect can only meet a video requirement. However, photographing requires higher image quality. Consequently, capturing the image in the video stream cannot capture an image that the user is satisfied with.

An embodiment of this application provides a method for capturing an image during video recording, so that an image can be captured in a video recording process and image quality of a captured image can be improved.

On the one hand, in this embodiment of this application, as shown in FIG. 4, an electronic device (for example, a mobile phone) may buffer a Bayer image exposed and output by a sensor in a first buffer queue (Buffer). A plurality of frames of Bayer images may be buffered in the Buffer. In this case, even if there is delay duration (for example, 120 ms-160 ms) shown in FIG. 3 from receiving a capture operation of a user to receiving a capture instruction by a snapshot program, in the delay duration, a frame output by the sensor can be buffered in the Buffer. Therefore, when the mobile phone receives the capture operation of the user, the Bayer image output by the sensor can be further buffered in the first buffer queue. In addition, image content of the frame output by the sensor will not change much in a short time. In this case, as shown in FIG. 4, a frame selection module of the mobile phone may select, as the captured image, one frame of image with good image quality from the Buffer based on additional information of the image buffered in the Buffer. In this way, image quality of the captured image can be improved.

On the other hand, as shown in FIG. 4, the electronic device may further process, by using a preset RAW domain AI image enhancement algorithm model (briefly referred to as a preset RAW domain image processing algorithm), a captured frame selected by the frame selection module. Finally, an encoder 3 encodes a processing result to obtain a captured photo.

The preset RAW domain image processing algorithm is a deep learning network for image quality enhancement in a RAW domain. In this solution, the preset RAW domain image processing algorithm can be used to improve image quality of the captured frame.

In conclusion, according to the method in this embodiment of this application, an image that meets a user requirement can be captured in the video recording process, and the image quality of the captured image can be improved.

The preset RAW domain image processing algorithm is a deep learning network for image quality enhancement in a RAW domain. The preset RAW domain image processing algorithm may also be referred to as a preset image quality enhancement algorithm, a preset image quality enhancement algorithm model, or a preset RAW domain AI model.

In some embodiments, the preset RAW domain image processing algorithm may be a software image processing algorithm. The preset RAW domain image processing algorithm may be a software algorithm in an algorithm library at a hardware abstraction layer (hardware abstraction layer, HAL) of the mobile phone.

In some other embodiments, the preset RAW domain image processing algorithm may be a hardware image processing algorithm. The preset RAW domain image processing algorithm may be the hardware image processing algorithm implemented by invoking an image processing algorithm capability of an ISP.

It should be noted that the preset RAW domain image processing algorithm may also be referred to as a preset image processing algorithm. In this embodiment of this application, the reason why the algorithm is referred to as the preset RAW domain image processing algorithm is that an image in the RAW domain is input to the preset RAW domain image processing algorithm. The preset RAW domain image processing algorithm may output an image in the RAW domain, or may output an image in an RGB domain. This is not limited in this embodiment of this application.

The encoder 1, the encoder 2, and the encoder 3 may be three different encoders. The mobile phone may respectively encode the preview stream, the video recording stream, and a capture stream by using the three different encoders. Alternatively, the encoder 1, the encoder 2, and the encoder 3 may be a same encoder. One encoder may include a plurality of encoding units. The mobile phone may respectively encode the preview stream, the video recording stream, and the capture stream by using three different encoding units in one encoder. Alternatively, the encoder 1 and the encoder 2 may be two different encoding units in a same encoder, and the encoder 3 may be another encoder. Encoding manners of different encoders may be the same or different. Encoding manners of different encoding units of the same encoder may be the same or different. Therefore, image formats output by the encoder 1 and the encoder 2 may be the same or different. For example, images output by the encoder 1 and the encoder 2 may be images in any format, for example, joint photographic experts group (Joint Photographic Experts Group, JPEG) or tag image file format (Tag Image File Format, TIFF).

The image output by the image sensor (Sensor) shown in FIG. 1 or FIG. 4 is an image in a Bayer (Bayer) format (referred to as the Bayer image). Bayer, JPEG, and TIFF are three expression formats of an image. For detailed descriptions of the Bayer image and a JPEG image, refer to related content in the conventional technology. Details are not described herein again.

For example, the electronic device in this embodiment of this application may be may be a device including a camera, for example, a mobile phone, a tablet computer, a smartwatch, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), and an augmented reality (augmented reality, AR)/virtual reality (virtual reality, VR) device. A specific form of the electronic device is not specifically limited in this embodiment of this application.

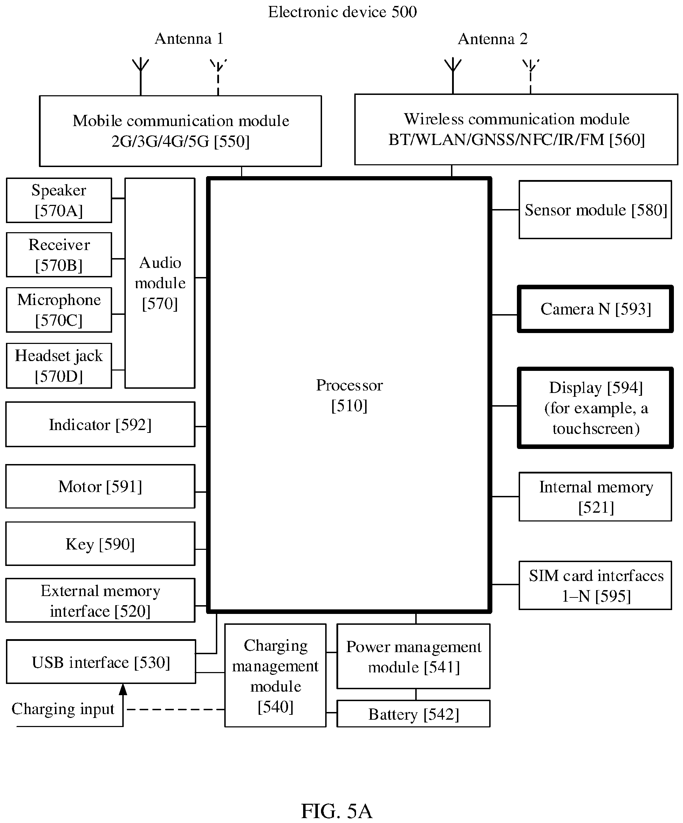

The following describes the embodiments of this application in detail with reference to the accompanying drawings. FIG. 5A is a schematic diagram of a structure of an electronic device 500 according to an embodiment of this application. As shown in FIG. 5A, the electronic device 500 may include a processor 510, an external memory interface 520, an internal memory 521, a universal serial bus (universal serial bus, USB) interface 530, a charging management module 540, a power management module 541, a battery 542, an antenna 1, an antenna 2, a mobile communication module 550, a wireless communication module 560, an audio module 570, a speaker 570A, a receiver 570B, a microphone 570C, a headset jack 570D, a sensor module 580, a key 590, a motor 591, an indicator 592, a camera 593, a display 594, a subscriber identification module (subscriber identification module, SIM) card interface 595, and the like.

The sensor module 580 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It can be understood that the structure illustrated in this embodiment does not constitute a specific limitation on the electronic device 500. In some other embodiments, the electronic device 500 may include more or fewer components than those shown in the figure, or combine some components, or split some components, or have different component arrangements. The illustrated components may be implemented by using hardware, software, or a combination of software and hardware. The processor 510 may include one or more processing units. For example, the processor 510 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 500. The controller can generate an operation control signal based on instruction operation codes and a timing signal, and complete the control of fetching and executing instructions.

The processor 510 may be further provided with a memory for storing instructions and data. In some embodiments, the memory in the processor 510 is a cache. The memory can store an instruction or data that the processor 510 has just used or used cyclically. If the processor 510 needs to use the instruction or data again, the instruction or data can be directly invoked from the memory. Repeated access is avoided, and a waiting time of the processor 510 is reduced, thereby improving system efficiency.

In some embodiments, the processor 510 may include one or more interfaces. It can be understood that the interface connection relationship between the modules illustrated in the embodiments is merely an example for description, and does not constitute a limitation on the structure of the electronic device 500. In some other embodiments, the electronic device 500 may alternatively use an interface connection mode that is different from those in the foregoing embodiments, or use a combination of a plurality of interface connection modes.

The charging management module 540 is configured to receive a charging input from a charger. When charging the battery 542, the charging management module 540 can further supply power to the electronic device by using the power management module 541.

The power management module 541 is configured to connect the battery 542, the charging management module 540, and the processor 510. The power management module 541 receives an input of the battery 542 and/or an input of the charging management module 540, and supplies power to the processor 510, the internal memory 521, an external memory, the display 594, the camera 593, the wireless communication module 560, and the like.

The wireless communication function of the electronic device 500 may be implemented by using the antenna 1, the antenna 2, the mobile communication module 550, the wireless communication module 560, the modem processor, the baseband processor, and the like.

The antenna 1 and the antenna 2 are configured to transmit and receive electromagnetic wave signals. In some embodiments, the antenna 1 of the electronic device 500 is coupled to the mobile communication module 550, and the antenna 2 is coupled to the wireless communication module 560, so that the electronic device 500 can communicate with a network and another device by using a wireless communication technology.

The electronic device 500 implements a display function by using the GPU, the display 594, the application processor, and the like. The GPU is an image processing microprocessor, which is connected to the display 594 and the application processor. The GPU is configured to perform mathematical and geometric calculation and render graphics. The processor 510 may include one or more GPUs that execute program instructions to generate or change display information.

The display 594 is configured to display an image, a video, and the like. The display 594 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini LED, a micro LED, a micro-OLED, a quantum dot light emitting diode (quantum dot light emitting diodes, QLED), or the like.

The electronic device 500 can implement a photographing function by using the ISP, the camera 593, the video codec, the GPU, the display 594, the application processor, and the like.

The ISP is configured to process data fed back by the camera 593. For example, during photographing, a shutter is pressed, light is transmitted to a photosensitive element of the camera by using a lens, an optical signal is converted into an electrical signal, and the photosensitive element of the camera transfers the electrical signal to the ISP for processing, so that the electrical signal is converted into an image visible to a naked eye. The ISP can further optimize algorithms for noise, brightness, and a skin color of the image. The ISP can further optimize parameters such as exposure and color temperature in a photographing scenario. In some embodiments, the ISP may be disposed in the camera 593.

The camera 593 is configured to capture a static image or a video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP. The ISP converts the electrical signal into a digital image signal. The ISP outputs the digital image signal to the DSP for processing. The DSP converts the digital image signal into an image signal in a standard format of RGB, YUV, or the like. In some embodiments, the electronic device 500 may include N cameras 593, where N is a positive integer greater than 1.

The digital signal processor is configured to process a digital signal. In addition to processing a digital image signal, the digital signal processor can further process another digital signal. For example, when the electronic device 500 selects a frequency, the digital signal processor is configured to perform Fourier transform or the like on energy of the frequency.

The video codec is configured to compress or decompress a digital video. The electronic device 500 may support one or more types of video codecs. Therefore, the electronic device 500 may play or record videos in a plurality of encoding formats, such as moving picture experts group (moving picture experts group, MPEG)1, MPEG2, MPEG3, and MPEG4.

The NPU is a neural-network (neural-network, NN) computing processor that processes input information quickly by referring to a structure of a biological neural network, for example, by referring to a transmission mode between human brain neurons, and can further perform self-learning continuously. The NPU can implement applications such as intelligent cognition of the electronic device 500, for example, image recognition, face recognition, voice recognition, and text understanding.

The external memory interface 520 may be configured to connect to an external memory card, such as a micro SD card, to extend a storage capability of the electronic device 500. The external memory card communicates with the processor 510 by using the external memory interface 520, to implement a data storage function. For example, music, video, and other files are stored in the external memory card.

The internal memory 521 may be configured to store computer executable program code, where the executable program code includes instructions. The processor 510 executes various functional applications and data processing of the electronic device 500 by running the instructions stored in the internal memory 521. For example, in this embodiment of this application, the processor 510 may execute the instructions stored in the internal memory 521, and the internal memory 521 may include a program storage area and a data storage area.

The program storage area may store an operating system, an application required by at least one function (such as a sound play function or an image play function), or the like. The data storage area may store data (such as audio data and a phone book) created during use of the electronic device 500. In addition, the internal memory 521 may include a high-speed random access memory, and may further include a non-volatile memory, such as at least one magnetic disk storage device, a flash memory device, or a universal flash storage (universal flash storage, UFS).

The electronic device 500 can implement audio functions by using the audio module 570, the speaker 570A, the receiver 570B, the microphone 570C, the headset jack 570D, the application processor, and the like. The audio functions are, for example, music playback and sound recording. The key 590 includes a power-on key, a volume key, and the like. The motor 591 may generate a vibration prompt. The indicator 592 may be an indicator light, which may be configured to indicate a charging state and a power change, or to indicate a message, a missed call, a notification, or the like.

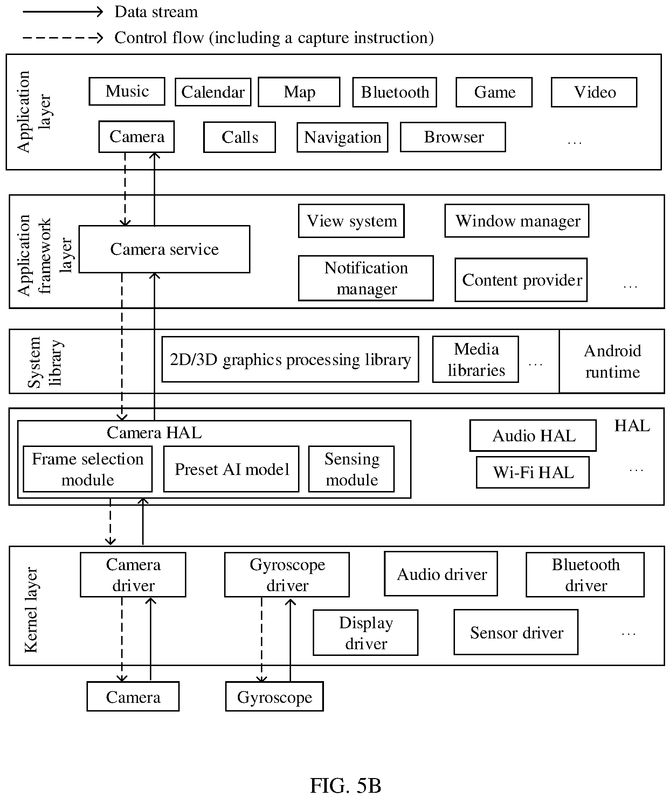

The SIM card interface 595 is configured to connect to a SIM card. The SIM card may be inserted into the SIM card interface 595 or pulled out of the SIM card interface 595, so that the SIM card is in contact with or separated from the electronic device 500. The electronic device 500 can support one or N SIM card interfaces, where N is a positive integer greater than 1. The SIM card interface 595 can support the Nano SIM card, the Micro SIM card, the SIM card, and the like. The method in the following embodiments may be implemented in the electronic device 500 having the foregoing hardware structure. In the following embodiments, an example in which the electronic device 500 is the mobile phone is used to describe the method in the embodiments of this application. FIG. 5B is a block diagram of a software architecture of a mobile phone according to an embodiment of this application.

The hierarchical architecture divides software into layers, and each layer has a clear function and division of labor. The layers communicate with each other by using a software interface. In some embodiments, an Android^{™} system is divided into five layers: an application layer, an application framework layer, an Android runtime (Android runtime) and a system library, a hardware abstraction layer (hardware abstraction layer, HAL), and a kernel layer from top to bottom. It should be understood that the Android system is used as an example for description in this specification. In another operating system (for example, a Harmony^{™} system or an IOS^{™} system), the solutions of this application can be implemented, provided that functions implemented by functional modules are similar to those implemented in the embodiments of this application.

The application layer may include a series of application packages.

As shown in FIG. 5B, applications such as Phone, Memo, Browser, Contacts, Gallery, Calendar, Map, Bluetooth, Music, Video, and SMS may be installed at the application layer.

In this embodiment of this application, an application with a photographing function, for example, a camera application, may be installed at the application layer. Certainly, when another application needs to use the photographing function, the camera application may be invoked to implement the photographing function.

The application framework layer provides an application programming interface (application programming interface, API) and a programming framework for applications at the application layer. The application framework layer includes some predefined functions.

For example, the application framework layer may include a window manager, a content provider, a view system, a resource manager, and a notification manager. This is not limited in this embodiment of this application.

For example, the window manager is used to manage a window program. The window manager may obtain a display size, determine whether there is a status bar, lock a screen, take a screenshot, and the like. The content provider is used to store and obtain data, and enables the data to be accessible to an application. The data may include videos, images, audios, calls made and received, browsing histories and bookmarks, phone books, and the like. The view system may be used to construct a display interface of an application. Each display interface may include one or more controls. Generally, the control may include interface elements such as an icon, a button, a menu, a tab, a text box, a dialog box, a status bar, a navigation bar, and a widget (Widget). The resource manager provides various resources for applications, such as localized strings, icons, pictures, layout files, and video files. The notification manager enables the application to display notification information in the status bar, which can be used to convey a notification-type message, and can automatically disappear after a short stay without user interaction. For example, the notification manager is used for notifying download completion or as a message reminder. The notification manager may alternatively be a notification that appears in the status bar at the top of the system in a form of a chart or a scroll bar text, for example, a notification for an application running in the background, or a notification that appears on a screen in a form of a dialog window. For example, a text message is displayed in the status bar, a prompt tone is made, vibration is performed, and an indicator light flashes.

As shown in FIG. 5B, the Android runtime includes a core library and a virtual machine. The Android runtime is responsible for scheduling and management of the Android system.

The core library includes two parts: one is a functional function that a java language needs to invoke, and the other is a core library of Android.

The application layer and the application framework layer run on the virtual machine. The virtual machine executes java files at the application layer and the application framework layer as binary files. The virtual machine is used to implement functions such as object lifecycle management, stack management, thread management, security and exception management, and garbage collection.

The system library may include a plurality of functional modules, such as a surface manager (surface manager), media libraries (Media Libraries), a 3D graphics processing library (for example, an OpenGL ES), and a 2D graphics engine (for example, an SGL).

The surface manager is used to manage a display subsystem, and provide fusion of 2D and 3D layers for a plurality of applications. The media libraries support a plurality of common audio and video formats for playback and recording, still image files, and the like. The media libraries may support a plurality of audio and video encoding formats, such as MPEG4, H.264, MP3, AAC, AMR, JPG, and PNG. The 3D graphics processing library is used to implement 3D graphics drawing, image rendering, composition, layer processing, and the like. The 2D graphics engine is a drawing engine for 2D graphics.

The kernel layer is located below the HAL, and is a layer between hardware and software. The kernel layer includes at least a display driver, a camera driver, an audio driver, and a sensor driver. This is not limited in this embodiment of this application.

In this embodiment of this application, still as shown in FIG. 5B and using the camera application as an example, a camera service (Camera Service) may be disposed at the application framework layer. The camera application may enable the camera service by invoking a preset API. During running, the camera service can interact with a camera HAL at the hardware abstraction layer (HAL). The camera HAL is responsible for interacting with a hardware device (for example, the camera) that implements a photographing function and that is in the mobile phone. On the one hand, the camera HAL hides implementation details (for example, a specific image processing algorithm) of a related hardware device. In addition, the camera HAL can provide an interface for invoking the related hardware device to the Android system.

For example, during running, the camera application can send, to the camera service, a related control command (for example, a preview, zooming in, photographing, video recording, or capture instruction) delivered by a user. On the one hand, the camera service can send the received control command to the camera HAL, so that the camera HAL can invoke the camera driver at the kernel layer based on the received control command. The camera driver drives hardware devices such as the camera to collect image data in response to the control command. For example, the camera may transmit, at a specific frame rate, the data of each frame of the collected image to the camera HAL by using the camera driver. For a transfer process of the control command in the operating system, refer to a detailed transfer process of a control flow in FIG. 5B.

On the other hand, after receiving the control command, the camera service can determine a photographing policy at this time based on the received control command, and a specific image processing task that needs to be executed on the collected image data is set in the photographing policy. For example, in a preview mode, the camera service may set an image processing task 1 in the photographing policy to implement a face detection function. For another example, if the user enables a facial beautification function in the preview mode, the camera service may further set an image processing task 2 in the photographing policy to implement the facial beautification function. Further, the camera service may send the determined photographing policy to the camera HAL. After receiving the data of each frame of image collected by the camera, the camera HAL may execute a corresponding image processing task on the image data according to the photographing policy delivered by the camera service, to obtain each frame of photographed image obtained after image processing. For example, the camera HAL may execute the image processing task 1 on the received data of each frame of image according to a photographing policy 1, to obtain each corresponding frame of photographed image. After the photographing policy 1 is updated to a photographing policy 2, the camera HAL may execute the image processing task 2 on the received data of each frame of image according to the photographing policy 2, to obtain each corresponding frame of photographed image.

Subsequently, the camera HAL can report each frame of photographed image obtained after the image processing to the camera application by using the camera service. The camera application can display each frame of photographed image on the display interface, or the camera application saves each frame of photographed image in a form of a photo or a video in the mobile phone. For a transfer process of the photographed image in the operating system, refer to a detailed transfer process of a data stream in FIG. 5B.

With reference to FIG. 5B, this embodiment of this application describes an operating principle for implementing the method in the embodiments of this application at each software layer in the mobile phone.

When running in a video recording mode, the camera application may send a capture instruction delivered by the user to the camera service. In the video recording mode, the camera HAL may invoke, based on the previously received video recording instruction, the camera driver at the kernel layer. The camera driver drives the hardware devices such as the camera to collect the image data in response to the video recording instruction. For example, the camera may transmit, at a specific frame rate, the data of each frame of the collected image to the camera HAL by using the camera driver. A data stream that includes each frame of image transmitted by the camera driver based on the video recording instruction to the camera HAL may be the video recording stream described in the embodiments of this application.

In addition, after receiving the capture instruction, the camera service may determine, based on the received capture instruction, that a photographing policy 3 in this case is to capture an image during video recording. A specific image processing task 3 that needs to be executed on the collected image data is set in the photographing policy, and the image processing task 3 is used to implement a capture function during video recording. Further, the camera service may send the determined photographing policy 3 to the camera HAL.

After receiving the data of each frame of image collected by the camera, the camera HAL may execute the corresponding image processing task 3 on the image data according to the photographing policy 3 delivered by the camera service, to obtain a corresponding captured photo. It should be noted that, in this embodiment of this application, each frame of image that is exposed and output by an image sensor (Sensor) of the camera may be buffered in a first buffer queue (Buffer). The first buffer queue (Buffer) may be disposed at any layer of a mobile phone software system. For example, the first buffer queue (Buffer) may be provided in a memory area that is accessed by the camera HAL by using a software interface. In response to the capture instruction, the camera HAL may select a captured frame from the Buffer based on metadata of a plurality of frames of Bayer images (namely, first images) buffered in the Buffer. In this way, the mobile phone may obtain a captured frame with high image quality from the first buffer queue. For example, additional information of the first image may include contrast of the first image and an angular velocity at which the camera collects the first image. It should be understood that, a smaller angular velocity indicates a lower jitter at which the camera collects the first image, and a greater angular velocity indicates a higher jitter at which the camera collects the first image. The contrast is used to represent a definition of the first image. Higher contrast indicates that the first image is clearer. In this way, based on the additional information of the first image, a Bayer image with a low jitter and a maximum image definition may be selected, as the captured frame, from the plurality of frames of Bayer images (namely, the first images) buffered in the Buffer.

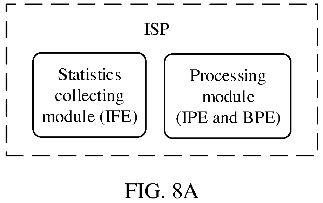

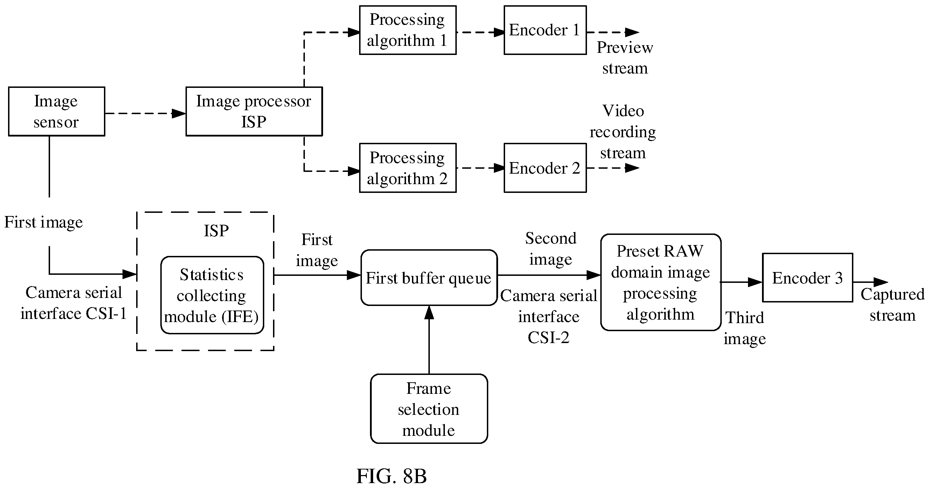

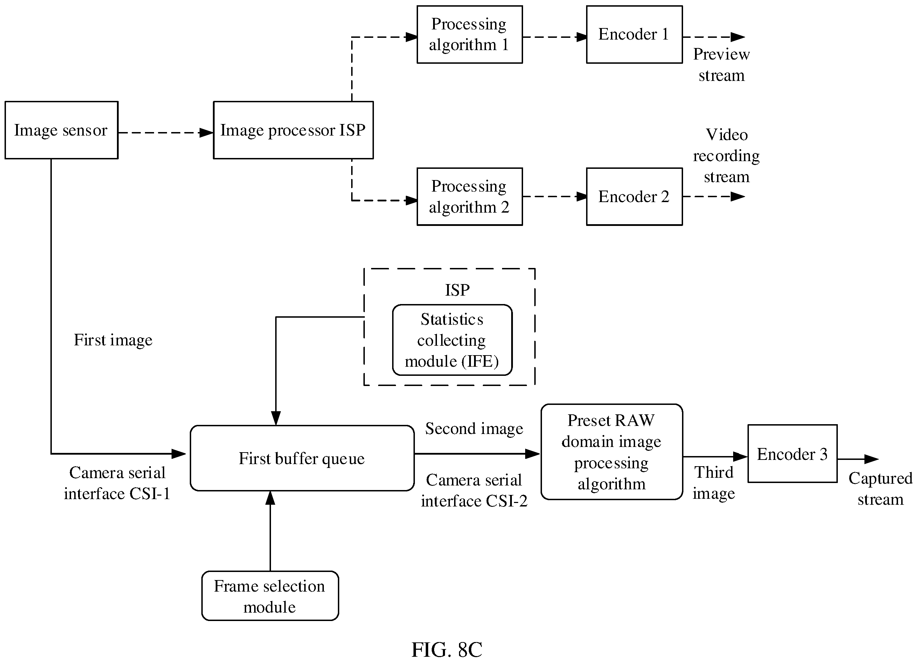

Additional information of each frame of Bayer image buffered in the Buffer may be obtained by assigning a value to the metadata (metadata) of each frame of Bayer image in the Buffer by the ISP of the camera at a hardware layer. As shown in FIG. 8A, the ISP may be divided into a statistics collecting module and a processing module based on functions. The statistics collecting module may include an (image front end, IFE), and the processing module may include an (image processing engine, IPE) and a (bayer processing segment, BPS). As shown in FIG. 8B or FIG. 8C, the additional information of the Bayer image may be obtained by assigning the value to the metadata of each frame of Bayer image in the Buffer by the statistics collecting module of the ISP.

The processing module of the ISP is configured to process an image that is exposed and output by the sensor.

The angular velocity may be collected by a gyroscope in the electronic device. In this embodiment of this application, the HAL stores software code used to schedule the gyroscope. In response to the video recording instruction, the camera HAL may invoke a gyroscope driver at the kernel layer, and the gyroscope driver drives the gyroscope to collect an angular velocity of the electronic device. The angular velocity of the electronic device is an angular velocity of the camera. Angular velocities of the camera may be different at different moments, and the sensor of the camera may expose and output different Bayer images at different moments. In addition, in response to the video recording instruction, the camera HAL may further invoke a camera driver at the kernel layer, and the camera driver drives the statistics collecting module of the ISP in the camera to write the angular velocity collected by the gyroscope into the metadata of the Bayer image output by the sensor.

The additional information of the Bayer image further includes a time at which the sensor exposes and outputs the Bayer image. The statistics collecting module of the ISP may determine an angular velocity of the Bayer image based on a collection time of the angular velocity and the exposure time of the Bayer image, and write the angular velocity of the Bayer image into the metadata of the Bayer image. In addition, the statistics collecting module of the ISP may further analyze the Bayer image to obtain contrast of the Bayer image, and write the contrast of the Bayer image into the metadata of the Bayer image.

It should be noted that, on some platforms, an exposure end time of the sensor may be used as a timestamp, and on some other platforms, an exposure start time of the sensor may be used as the timestamp. This is not limited in this embodiment of this application. Both the exposure end time and the exposure start time are referred to as the exposure time.

The statistics collecting module of the ISP may write the angular velocity and the contrast of each Bayer image in the Buffer to metadata of a corresponding Bayer image by using a first preset interface, for example, a first camera serial interface (camera serial interface, CSI). The first preset CSI may be a software interface between the sensor and the Buffer. For example, the first preset interface may be a CSI-1 shown in FIG. 8B or FIG. 8C.

The camera HAL further includes a preset RAW domain image processing algorithm. The camera HAL may invoke, by using a second preset interface (for example, a second preset CSI), the preset RAW domain image processing algorithm to process the captured frame and a frame adjacent to the captured frame, to obtain a processed image frame. The second preset CSI may be a software interface between the Buffer and the preset RAW domain image processing algorithm. For example, the second preset interface may be a CSI-2 shown in FIG. 8B or FIG. 8C. Then, the camera HAL may code the image frame by invoking the encoder (ENCODE), to obtain a frame of captured image. Finally, the camera HAL can report the captured image to the camera application by using the camera service. The camera application can save the captured image in a form of a photo in the mobile phone.

In some embodiments, the camera HAL further includes a sensing module. After the frame selection module selects the captured frame, the sensing module may determine, based on the captured frame and the frame adjacent to the captured frame, whether the mobile phone is in a high dynamic range (high dynamic range, HDR) scenario. Different image processing procedures are executed by the preset RAW domain image processing algorithm in the HDR scenario and a non-HDR scenario. For the image processing procedures executed by the preset RAW domain image processing algorithm in the HDR scenario and the non-HDR scenario, refer to detailed descriptions in the following embodiments. Details are not described herein again.

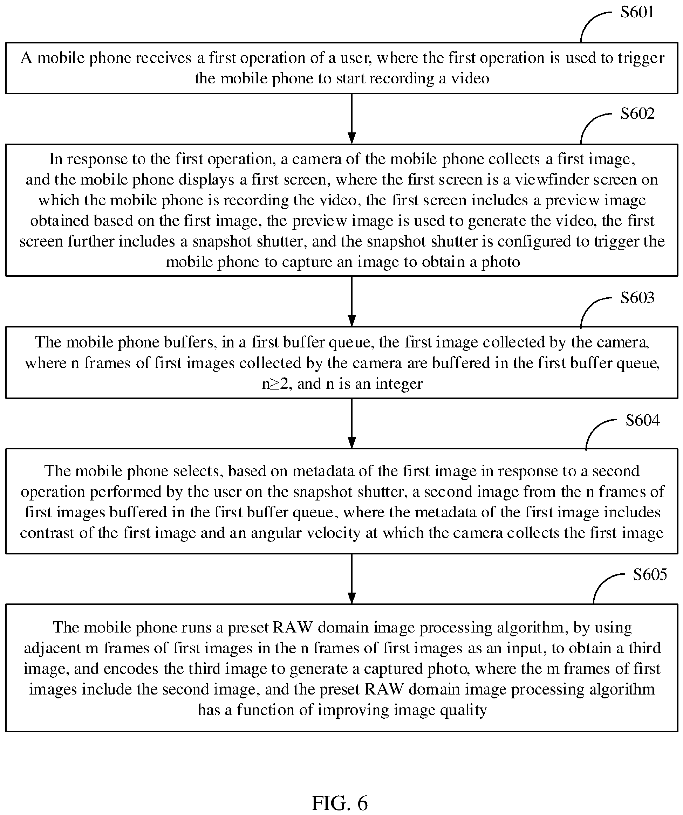

An embodiment of this application provides a method for capturing an image during video recording. The method may be applied to a mobile phone, and the mobile phone includes a camera. As shown in FIG. 6, the method may include S601 to S605.

S601: The mobile phone receives a first operation of a user, where the first operation is used to trigger the mobile phone to start recording a video.

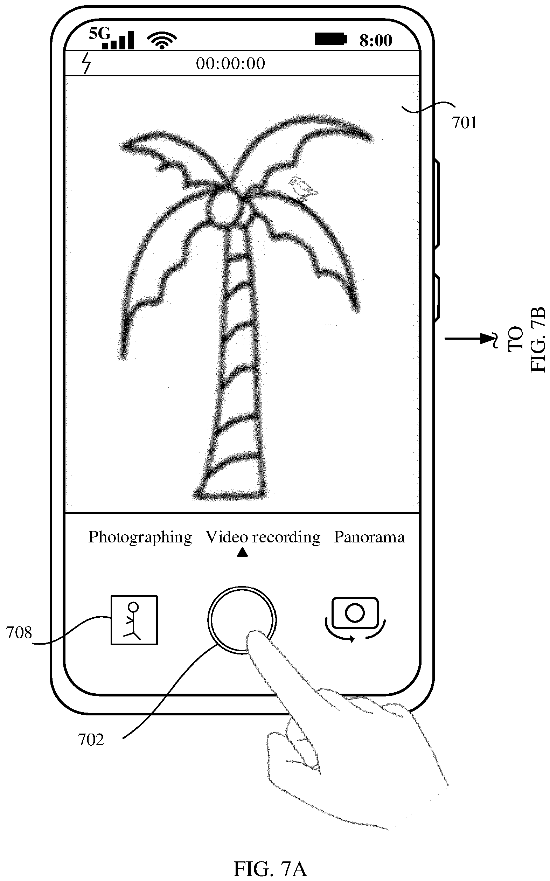

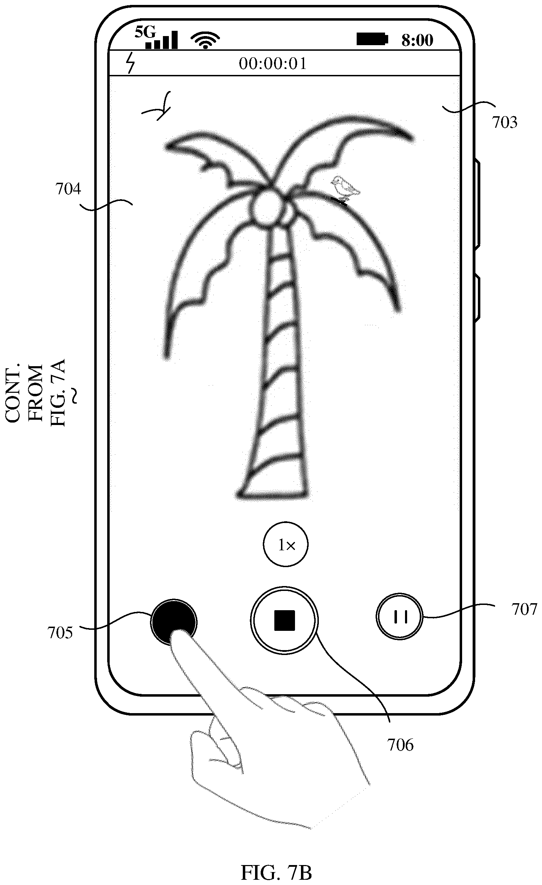

For example, the mobile phone may display a video viewfinder screen 701 shown in FIG. 7A-FIG. 7B. The video viewfinder screen 701 is a viewfinder screen before the mobile phone starts recording. The video viewfinder screen 701 includes a "start recording" button 702. The first operation may be a tap operation performed by the user on the "start recording" button 702 to trigger the mobile phone to start recording the video.

S602: In response to the first operation, the camera of the mobile phone collects a first image, and the mobile phone displays a first screen, where the first screen is a viewfinder screen on which the mobile phone is recording the video, the first screen includes a preview image obtained based on the first image, the preview image is used to generate the video, the first screen further includes a snapshot shutter, and the snapshot shutter is configured to trigger the mobile phone to capture an image to obtain a photo.

For example, that the first operation is the tap operation performed by the user on the "start recording" button 702 is used as an example. The mobile phone responds to the tap operation performed by the user on the "start recording" button 702, so that the camera of the mobile phone can start to collect an image (namely, the first image), and a display of the mobile phone can display a first screen 703 shown in FIG. 7A-FIG. 7B. The first screen 703 is the viewfinder screen on which the mobile phone is recording the video. As shown in FIG. 7A-FIG. 7B, the first screen 703 includes a preview image 704 obtained based on the first image. A plurality of frames of preview images 704 may form a preview stream shown in FIG. 8B or FIG. 8C.

This embodiment of this application describes a method for obtaining the preview image 704 based on the first image by the mobile phone. In S602, after the camera of the mobile phone collects the first image, and before the mobile phone displays the first screen, the mobile phone may process the first image in a manner of processing the preview stream shown in FIG. 1 or FIG. 4, to obtain the preview image 704. It should be noted that an ISP of the mobile phone may process, by using the ISP, each frame of first image collected by the camera.

For example, for the method for obtaining the preview image 704 based on the first image by the mobile phone, refer to a processing method of the "preview stream" shown in FIG. 4, FIG. 8B, or FIG. 8C.

As shown in FIG. 4, FIG. 8B, or FIG. 8C, an image sensor (Sensor) of the mobile phone is controlled by exposure, so that Bayer images can be continuously output. After image processing is performed on each frame of Bayer image by the ISP of the mobile phone, an obtained image is sent to an encoder (ENCODER) 1 for encoding, to obtain the preview image 704. The plurality of frames of preview images 704 processed may form a segment of video stream that can be previewed (namely, the preview stream).

It should be emphasized that, as shown in FIG. 7A-FIG. 7B, the first screen 703 further includes a snapshot shutter 702. The snapshot shutter 702 is configured to trigger the mobile phone to capture an image to obtain a photo. Specifically, the snapshot shutter 702 is configured to trigger the mobile phone to capture, in a video recording process, the image to obtain the photo. It can be figured out that, in a process of recording the video (namely, a video recording process), the mobile phone may collect some wonderful images. In the video recording process of the mobile phone, the user may expect the mobile phone to capture the wonderful images and save the wonderful images as photos for displaying to the user. In this embodiment of this application, the user taps the snapshot shutter 702 to implement a function of capturing the wonderful images in the video recording process.

To ensure that the mobile phone can capture, in response to a capture operation of the user (for example, the tap operation performed by the user on the snapshot shutter 702), an image that the user actually needs, the mobile phone may buffer the Bayer image exposed and output by the sensor in a first buffer queue (Buffer). In this case, even if there is delay duration (for example, 120 ms-160 ms) shown in FIG. 3 from receiving the capture operation of the user to receiving a capture instruction by the sensor, in the delay duration, a frame output by the sensor can be buffered in the Buffer. Therefore, when the mobile phone receives the capture operation of the user, the Bayer image output by the sensor can be further buffered in the first buffer queue. In addition, image content of the frame output by the sensor will not change much in a short time. Therefore, the mobile phone can select one frame of image with good image quality from the Buffer as a captured image. Specifically, in response to the first operation, the mobile phone may further perform S603.

S603: The mobile phone buffers, in the first buffer queue, the first image collected by the camera, where n frames of first images collected by the camera are buffered in the first buffer queue according to a first in first out rule, n≥1, and n is an integer.

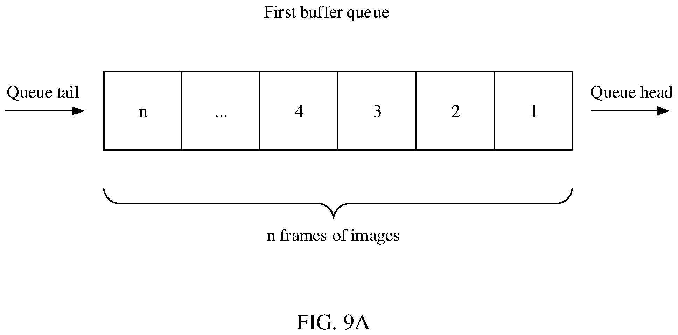

For example, in response to the first operation, the mobile phone may buffer, in a first buffer queue (Buffer) shown in FIG. 9A, the first image collected by the camera. It should be noted that the n frames of first images collected by the camera may be buffered in the first buffer queue according to the first in first out rule. As shown in FIG. 9A, an enqueuing operation that is used to insert the first image may be performed at a queue tail of the first buffer queue, and a dequeuing operation that is used to delete the first image may be performed at a queue head of the first buffer queue. When the n frames of first images are buffered in the first buffer queue, each time a frame of first image is inserted at the queue tail of the first buffer queue, a frame of first image is deleted at the queue head of the first buffer queue.

In some non-claimed embodiments, n may be equal to 1. In this case, one frame of first image may be buffered in the first buffer queue. In this way, when the mobile phone performs S604 to S605, only one frame of first image can be input to a preset RAW domain image processing algorithm.

In embodiments according to the claims, n is greater than 1. In this case, a plurality of frames of first images may be buffered in the first buffer queue. In this way, when the mobile phone performs S604 to S605, one frame of first image or a plurality of frames of first images can be input to the preset RAW domain image processing algorithm. That the plurality of frames of first images are input to the preset RAW domain image processing algorithm may play a role of image quality enhancement on the captured frame (namely, a reference frame). This makes it easy to obtain information such as noise and a texture, to further improve image quality of an image output by the preset RAW domain image processing algorithm.

In this embodiment of this application, n may be a preset value. Assuming that the sensor can expose *a* frames of Bayer images per second, and the delay duration shown in FIG. 3 is *b* seconds, the sensor can expose b/(1/a)=a×b frames of Bayer images within the delay duration b seconds. n may be greater than or equal to a×b.

S604: The mobile phone selects, based on additional information of the first image in response to a second operation performed by the user on the snapshot shutter, a second image from the n frames of first images buffered in the first buffer queue, where the additional information of the first image includes contrast of the first image and an angular velocity at which the camera collects the first image.

For example, the second operation may be a tap operation performed by the user on the snapshot shutter. For example, the second operation may be a tap operation performed by the user on the snapshot shutter shown in FIG. 7A-FIG. 7B. Alternatively, the second operation may be a continuous-tap operation performed by the user on the snapshot shutter. Each tap operation on the snapshot shutter is used to trigger the mobile phone to perform the following operations once: "selecting, based on additional information of the first image, a second image from the n frames of first images buffered in the first buffer queue" and S605. That is, the tap operation on the snapshot shutter is used to trigger the mobile phone to capture one photo. The continuous-tap operation on the snapshot shutter is used to trigger the mobile phone to capture a plurality of photos. A method for capturing the plurality of photos by the mobile phone in the video recording process is similar to the method for capturing one photo. Details are not described herein again.

In this embodiment of this application, as shown in FIG. 5B, a camera HAL at an HAL of the mobile phone may include a frame selection module. After the camera HAL receives a capture instruction from a camera service, the frame selection module may select, based on the additional information of the first image, the second image (namely, the captured frame, also referred to as the reference frame) from the n frames of first images buffered in the first buffer queue (Buffer). The additional information of the first image includes the contrast of the first image and the angular velocity at which the camera collects the first image (referred to as an angular velocity of the first image).

The contrast may also be referred to as a gradient. A greater gradient of a frame of image indicates that the image is clearer. The gradient may also be referred to as sharpness. Greater sharpness of a frame of image indicates that the image is clearer. That is, the contrast may be used to represent a definition of the first image. Higher contrast of a frame of image (for example, the first image) indicates that the image is clearer.

The angular velocity may be collected by a gyroscope sensor. An angular velocity of a frame of image (namely, the first image) may represent an angular velocity at which the camera (for example, the sensor of the camera) collects the image. A smaller angular velocity indicates a lower jitter at which the camera collects the first image, and a greater angular velocity indicates a higher jitter at which the camera collects the first image.

In this way, the mobile phone (for example, the frame selection module at the HAL of the mobile phone) may select, as the captured frame (namely, the second image), a Bayer image with a low jitter and a maximum image definition from the plurality of frames of Bayer images (namely, the first images) buffered in the first buffer queue (Buffer) based on the additional information of the first image. For example, the mobile phone (for example, the frame selection module at the HAL of the mobile phone) may traverse the n frames of first images buffered in the Buffer, and select, as the second image, a first image with a low jitter and a maximum image definition from the n frames of first images buffered in the Buffer based on the additional information of the first image. In some embodiments, the method in which the mobile phone selects the second image from the n frames of first images buffered in the first buffer queue (Buffer) based on the additional information of the first image may include Sa. Sa: The mobile phone selects a first image with largest contrast from the n frames of first images buffered in the first buffer queue (Buffer).

In one case, in the n frames of first images buffered in the first buffer queue (Buffer), there is one frame of first image with maximum contrast, which is greater than contrast of another first image other than this frame of first image. In this case, the mobile phone may use the frame of first image with maximum contrast as the second image.

In another case, the n frames of first images buffered in the first buffer queue (Buffer) may include at least two frames of first images with same contrast. In addition, the contrast of the at least two frames of first images is greater than contrast of another first image in the n frames of first images. In this case, the mobile phone may further perform Sb. Sb: The mobile phone selects, as the second image, a first image with a minimum angular velocity from the at least two frames of first images. It should be noted that metadata of the Bayer image (namely, the first image) exposed by the sensor does not include the additional information. The additional information of the first image may be obtained by assigning a value to metadata of each frame of Bayer image in the first buffer queue (Buffer) by a statistics collecting module of the ISP.

Then, the frame selection module in the mobile phone may select the second image from the n frames of first images buffered in the first buffer queue based on the additional information of the first image. For example, with reference to FIG. 8B and FIG. 8C, this embodiment of this application describes a schematic diagram of a principle of a method in which the mobile phone assigns the value to the metadata of each frame of Bayer image and selects the frame from the Buffer.

In some embodiments, for the method in which the mobile phone assigns the value to the metadata of the Bayer image and selects the frame from the Buffer, reference may be made to FIG. 8B.

As shown in FIG. 8B, the sensor may expose and output the Bayer image (namely, the first image). In this case, the metadata of the Bayer image is blank and does not include the additional information. Each time the sensor exposes and outputs a frame of Bayer image, and the statistics collecting module of the ISP in the mobile phone may read the frame of Bayer image, count additional information of the frame of Bayer image, and write the additional information into metadata (meta data) of the frame of Bayer image (that is, assigns a value to the metadata of the frame of Bayer image). For example, the statistics collecting module of the ISP may read, by using a first preset interface (for example, a CSI-1), each frame of Bayer image that is exposed and output by the sensor. Then, the statistics collecting module of the ISP may put a Bayer image obtained after the value is assigned to the metadata into the first buffer queue (Buffer). It should be noted that the metadata of the Bayer image put by the statistics collecting module of the ISP in the Buffer includes the additional information. Finally, the second image may be selected from the Buffer by using the frame selection module shown in FIG. 8B.

In some other embodiments, for the method in which the mobile phone assigns the value to the metadata of the Bayer image and selects the frame from the Buffer, reference may be made to FIG. 8C.

As shown in FIG. 8C, the sensor may expose and output the Bayer image (namely, the first image). In this case, the metadata of the Bayer image is blank and does not include the additional information. Each time the sensor exposes and outputs a frame of Bayer image, and the frame of Bayer image may enter the first buffer queue (Buffer). Metadata of the Bayer image that is exposed and output by the sensor and that enters the Buffer is blank and does not include additional information. For example, as shown in FIG. 8C, the Bayer image that is exposed and output by the sensor may enter the Buffer by using a first preset interface (for example, a CSI-1).

After the frame of Bayer image enters the Buffer, the statistics collecting module of the ISP in the mobile phone may count the additional information of the frame of Bayer image, and write the additional information into the metadata (meta data) of the frame of Bayer image (that is, assigns a value to the metadata of the frame of Bayer image). It should be noted that the metadata of the Bayer image to which the statistics collecting module of the ISP assigns the value and that is in the Buffer includes the additional information. Then, the second image may be selected from the Buffer by using the frame selection module shown in FIG. 8C.

In some embodiments, each frame of first image includes a timestamp, and the timestamp records a time (that is, an exposure time) at which the image sensor sensor outputs a corresponding first image. The timestamp may also be included in metadata of the first image.

A clock of an upper-layer application in the mobile phone is synchronized with a clock of the sensor that records output of the first image, or the clock of the upper-layer application in the mobile phone and the clock of the sensor that records output of the first image are a same system clock. A time at which the mobile phone receives the second operation (namely, the capture operation) may be recorded by an application layer of the mobile phone. In this case, when a system clock of the upper-layer application in the mobile phone is synchronized with a system clock of the sensor, the mobile phone (for example, the statistics collecting module of the ISP) may select, as the angular velocity of the first image based on a time at which the gyroscope sensor collects each angular velocity, an angular velocity whose collection time is closest to an exposure time recorded by a timestamp of the first image. Then, the statistics collecting module of the ISP may write the angular velocity of the first image into the metadata of the first image.

It should be noted that, on some platforms, an exposure end time of the sensor may be used as a timestamp, and on some other platforms, an exposure start time of the sensor may be used as the timestamp. This is not limited in this embodiment of this application. Both the exposure end time and the exposure start time are referred to as the exposure time.

In some other embodiments, if the n frames of first images buffered in the first buffer queue (Buffer) have same additional information, the mobile phone (for example, the frame selection module at the HAL of the mobile phone) may select, from the n frames of first images buffered in the first buffer queue (Buffer) based on the timestamp of the first image, a frame of first image with a time that is indicated by the timestamp and that is closest to a time at which the user triggers capturing as the captured frame (that is, the second image).

In some other embodiments, before "selecting the second image from the n frames of first images buffered in the first buffer queue (Buffer)", the mobile phone (for example, the frame selection module at the HAL of the mobile phone) may perform abnormal determining on the first image, discard an abnormal frame (that is, an abnormal first image) in the Buffer, and select the second image from a normal first image in the Buffer.

The mobile phone (for example, the frame selection module at the HAL of the mobile phone) may compare an exposure time of one frame of first image (denoted as an image frame a) with an exposure time of a previous frame of first image (denoted as an image frame b) of the image frame a to determine whether the image frame a is abnormal. It should be understood that an exposure time used by the sensor to expose and output each frame of Bayer image usually does not change greatly. For example, an exposure time of an adjacent image frame will not suddenly become very long, or an exposure time of the adjacent image frame will not suddenly become very short. For example, a difference between the exposure times of the adjacent image frames usually does not exceed 10 milliseconds (ms), and a maximum difference does not exceed 20 ms. Therefore, if a difference between the exposure time of the image frame a and the exposure time of the image frame b is greater than a preset exposure threshold, it indicates that the image frame a is abnormal. The preset exposure threshold may be a value that is less than 20 ms and that is about 10 ms. For example, the preset exposure threshold may be 10 ms, 9 ms, 11 ms, or 8 ms.

For a method in which the mobile phone (for example, the frame selection module at the HAL of the mobile phone) selects the second image from the normal first image in the Buffer, refer to the method in the foregoing embodiments. Details are not described herein again in this embodiment of this application.

S605: The mobile phone runs the preset RAW domain image processing algorithm, by using adjacent m frames of first images in the n frames of first images as an input, to obtain a third image, and encodes the third image to generate a captured photo, where the m frames of first images include the second image, and the preset RAW domain image processing algorithm has a function of improving image quality.

In some non-claimed embodiments, m may be equal to 1. That is, the m frames of first images are the second image. In this case, the mobile phone can obtain the third image with high image quality by running the preset RAW domain image processing algorithm by using the second image as the input. However, because parameters such as data integrity and a texture of one frame of image are limited, that the frame of image is used as the input to run the preset RAW domain image processing algorithm cannot effectively improve image quality of this frame of image.

Based on this, in accordance with the claimed embodiments, m is greater than 1. Specifically, the mobile phone may run the preset RAW domain image processing algorithm by using the second image and at least one frame of image adjacent to the second image as an input. That is, the adjacent m frames of first images that are in the n frames of first images and that include the second image may be used as the input to run the preset RAW domain image processing algorithm. It should be understood that images in the m frames of first images other than the second image may play a role of image quality enhancement on the captured frame (namely, the reference frame). This makes it easy to obtain information such as noise and a texture, to further improve image quality of the third image.

That is, the preset RAW domain image processing algorithm described in this embodiment of this application is a multi-frame input single-frame output neural network model. The preset RAW domain image processing algorithm is a deep learning network for image quality enhancement in a RAW domain. In this solution, the preset RAW domain image processing algorithm can be used to improve image quality of the captured image, which helps improve the image quality of the captured image.

It should be noted that, in this embodiment of this application, the third image output by the preset RAW domain image processing algorithm may be an image directly encoded by the encoder, and the third image output by the preset RAW domain image processing algorithm does not need to be processed by the ISP. In addition, in this embodiment of this application, the image is processed by using the preset RAW domain image processing algorithm in a combined manner of software implementation and invoking an ISP hardware module. The ISP hardware module is invoked to perform image processing, which can improve image processing efficiency and reduce power consumption of the mobile phone.

It should be noted that, in this embodiment of this application, in a time division multiplexing manner, the mobile phone may process the first image by using the ISP to obtain the preview image, and assign a value to the metadata of the first image by using the ISP (for example, the statistics collecting module of the ISP), and the ISP accepts invoking from the preset RAW domain image processing algorithm to perform image processing. That is, the ISP (for example, the statistics collecting module of the ISP) assigns the value to the metadata of the first image, and the ISP accepts invoking from the preset RAW domain image processing algorithm to perform image processing, which does not affect that the mobile phone processes the first image by using the ISP to obtain the preview image. In other words, that the mobile phone processes the capture stream shown in FIG. 4, FIG. 8B, or FIG. 8C does not affect that the mobile phone processes the video streams (such as the preview stream and a video recording stream).

In this embodiment of this application, image processing performed by using the preset RAW domain image processing algorithm may include at least the following several items: black level correction (black level correction, BLC), automatic white balance (automatic white balance, AWB), image registration (image registration), denoising super-resolution processing, and brightness processing. The brightness processing may include long-short frame fusion and tone mapping (Tone mapping). The long-short frame fusion is optional. In a high dynamic range (high dynamic range, HDR) scenario (for example, a scenario in which the sun or a person in backlight is photographed), the long-short frame fusion need to be performed. In another scenario, the long-short frame fusion may not be performed.

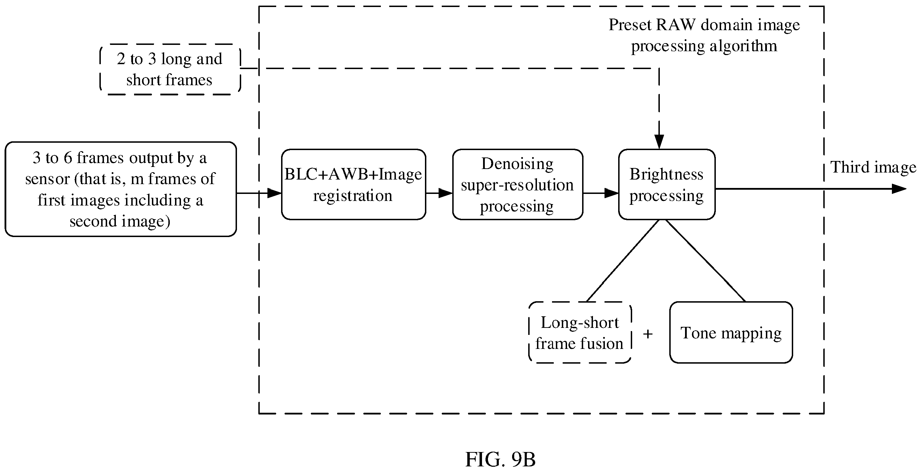

For example, refer to FIG. 9B. FIG. 9B is a functional block diagram of performing image processing by using a preset RAW domain image processing algorithm according to an embodiment of this application.

The mobile phone (as shown in FIG. 5B, the frame selection module at the cameral HAL) may select the second image. The mobile phone (as shown in FIG. 5B, the sensing module at the cameral HAL) may calculate a proportion of an over-exposure area in the entire image in image content of each of the m frames of first images including the second image. If a quantity of the first images whose proportion of the over-exposure area in the entire image is greater than or equal to a preset proportion threshold is greater than a preset quantity threshold, the mobile phone (for example, the sensing module shown in FIG. 5B) may determine that the mobile phone is in the HDR scenario. If a quantity of the first images whose proportion of the over-exposure area in the entire image is greater than the preset proportion threshold is less than the preset quantity threshold, the mobile phone (for example, the sensing module shown in FIG. 5B) may determine that the mobile phone is not in the HDR scenario.

In a non-HDR scenario, as shown in FIG. 9B, 3 to 6 normal frames output by the sensor (namely, the m frames of first images including the second image) may be used as an input of a preset AI-RAW module. The preset AI-RAW module may perform black level correction (BLC), automatic white balance (AWB), image registration, denoising super-resolution processing, brightness processing (such as tone mapping), and the like on the 3 to 6 normal frames output by the sensor, to output the third image.

In the HDR scenario, the cameral HAL of the mobile phone controls, by using a camera driver, the sensor to additionally expose and output 2 to 3 long and short frames. The 2 to 3 long and short frames include a long-exposure long frame and a short-exposure short frame. As shown in FIG. 9B, the 3 to 6 normal frames output by the sensor (namely, the m frames of first images including the second image) and the 2 to 3 long and short frames may be used as an input of the preset AI-RAW module. The preset AI-RAW module performs long-short frame fusion and may perform black level correction (BLC), automatic white balance (AWB), image registration, denoising super-resolution processing, other brightness processing (such as tone mapping), and the like on the 3 to 6 normal frames output by the sensor, to output the third image.

It should be noted that, for principles and functions of BLC, AWB, image registration, denoising super-resolution processing, brightness processing, long-short frame fusion, and tone mapping, refer to related descriptions in the conventional technology. Details are not described herein again in this embodiment of this application.

It may be learned from the foregoing embodiment that the preset RAW domain image processing algorithm may be used to invoke the ISP hardware module to perform image processing. For example, the preset RAW domain image processing algorithm may be used to invoke the ISP hardware module to perform at least one image processing work: including long-short frame fusion and optionally BLC, AWB, image registration, denoising super-resolution processing, brightness processing, and tone mapping.

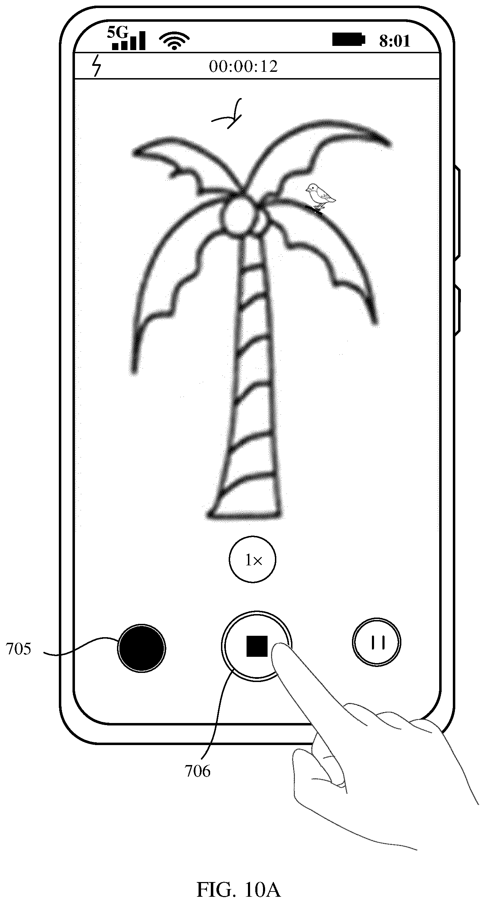

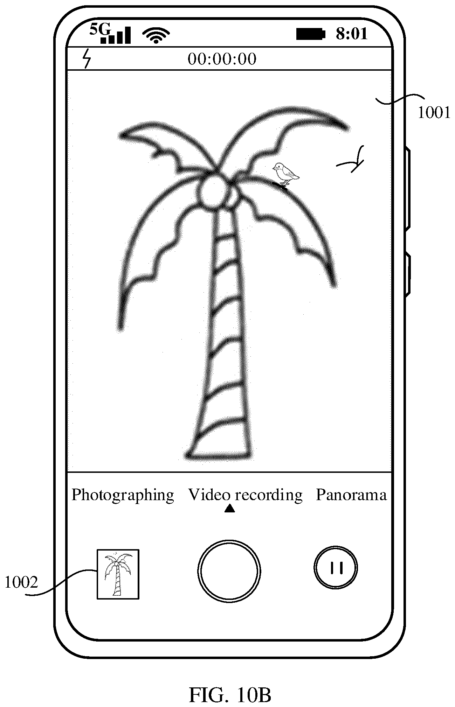

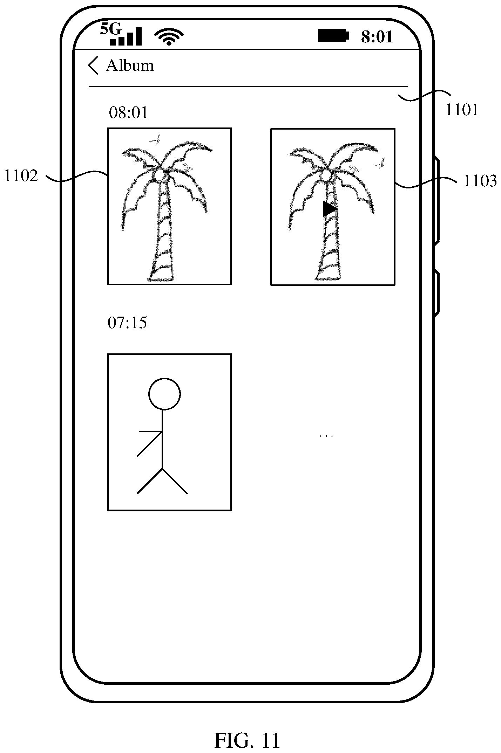

For example, the mobile phone may generate and save the captured photo in response to the tap operation (that is, the second operation) performed by the user on the snapshot shutter shown in FIG. 7A-FIG. 7B. However, in the video recording process of the mobile phone, the user cannot view the captured photo. After video recording stops, the user can view the captured photo in an album. For example, in response to a tap operation performed by the user on a "stop recording" button 706 shown in FIG. 10A-FIG. 10B, the mobile phone may display a video viewfinder screen 1001 shown in FIG. 10A-FIG. 10B. The video viewfinder screen 1001 is a viewfinder screen before the mobile phone starts recording. In comparison with the video viewfinder screen 701 shown in FIG. 7A-FIG. 7B, a photo in a photo option on the viewfinder screen of the mobile phone is updated from 708 shown in FIG. 7A-FIG. 7B to 1002 shown in FIG. 10A-FIG. 10B. The mobile phone may display an album list screen 1101 shown in FIG. 11 in response to a start operation performed by the user on an album application. The album list screen 1101 includes a plurality of photos and videos stored in the mobile phone. For example, as shown in FIG. 7A-FIG. 7B, the album list screen 1101 includes a video 1103 recorded by the mobile phone and a photo 1102 captured by the mobile phone in a process of recording the video 1103.

In this embodiment of this application, the mobile phone may buffer the Bayer image exposed and output by the sensor in the first buffer queue (Buffer). A plurality of frames of Bayer images may be buffered in the first buffer queue. In this case, even if there is the delay duration shown in FIG. 3 from receiving the capture operation of the user to receiving the capture instruction by the sensor, in the delay duration, the frame output by the sensor can be buffered in the Buffer. Therefore, when the mobile phone receives the capture operation of the user, the Bayer image output by the sensor can be further buffered in the first buffer queue. In addition, image content of the frame output by the sensor will not change much in a short time. Therefore, the mobile phone can select one frame of image with good image quality from the Buffer as a captured image.

In addition, the mobile phone can further process, by using the preset RAW domain image processing algorithm, the captured frame selected by the frame selection module. Finally, an encoding module encodes a processing result to obtain a high-definition image frame. The preset RAW domain image processing algorithm is a deep learning network for image quality enhancement in a RAW domain. In this solution, the preset RAW domain image processing algorithm can be used to improve image quality of the captured image, which helps improve the image quality of the captured image.

In conclusion, according to the method in this embodiment of this application, an image that meets a user requirement can be captured in the video recording process, and the image quality of the captured image can be improved.

In the foregoing embodiment, the mobile phone (for example, the frame selection module of the mobile phone) may automatically select a second image from the n frames of first images. Although the second image automatically selected by the mobile phone has high image quality, However, the second image automatically selected by the mobile phone may not be the image that meets the user requirement. Based on this, in some other embodiments, the user may select a frame. That is, the user selects the captured frame (namely, the second image) from the n frames of first images. In this embodiment, after S604 and before S605, the method in this embodiment of this application may further include S1201 and S1202.

S1201: The mobile phone displays a second screen. The second screen includes preview windows of the m frames of first images, and the second screen is used to prompt the user to select the second image (namely, the captured frame). The electronic device displays, on the second screen by using a preset mark, a preview window of the second image that is automatically selected by the mobile phone and that is in the m frames of first images.

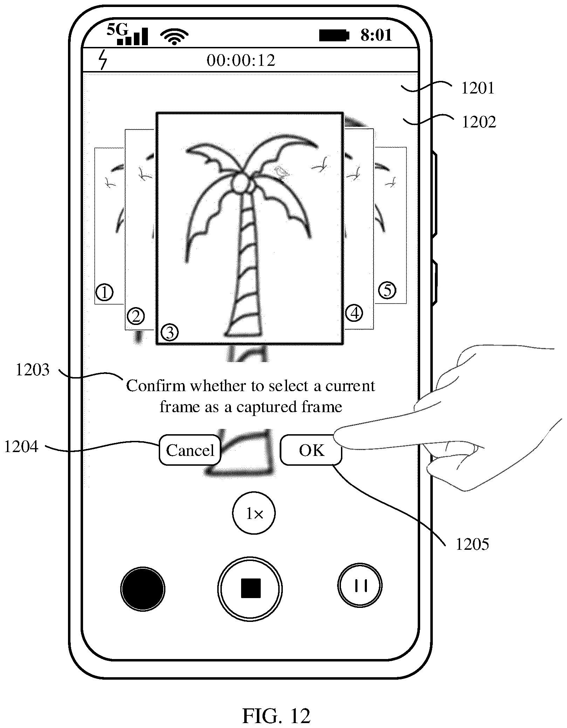

For example, the mobile phone may display a second screen 1201 shown in FIG. 12. The second screen 1201 may include a preview image 1202. The second screen 1201 may further include the preview windows of the m frames of first images. For example, m=5 is used as an example. The second screen 1201 includes a preview window of a first image ①, a preview window of a first image ②, a preview window of a first image ③, a preview window of a first image ④, and a preview window of a first image ⑤. The first image ③ shown in FIG. 12 is the second image. As shown in FIG. 12, the mobile phone samples the preview window of the first image ③ (namely, the second image) displayed with the preset mark (for example, highlighted in a bold black box). In this way, the preview window of the first image ③ can be distinguished from the preview window of the first image ①, the preview window of the first image ②, the preview window of the first image ④, and the preview window of the first image ⑤. Certainly, the preset mark includes, but is not limited to, the bold black box.

The second screen may further include first prompt information. The first prompt information is used to prompt the user to select the second image (namely, the captured frame). For example, the second screen 1201 further includes first prompt information 1203, for example, "Confirm whether to select the current frame as the captured frame". The current frame in the first prompt information 1203 refers to the first image ③ (namely, the second image) corresponding to the preview window (for example, the preview window of the first image ③) displayed with the preset mark.

S1202: The mobile phone determines, in response to a selection operation performed by the user on any preview window on the second screen, that a first image corresponding to a preview window selected by the user is the second image selected by the user.

The preview window of the first image ③ (namely, the second image) may be selected by default by the user on the second screen. For example, the second screen 1201 further includes an "OK" button 1205 and a "Cancel" button 1204. In response to a tap operation performed by the user on the "OK" button 1205 shown in FIG. 12, which indicates that the user selects the preview window of the first image ③, the mobile phone may use the first image ③ as the second image selected by the user.

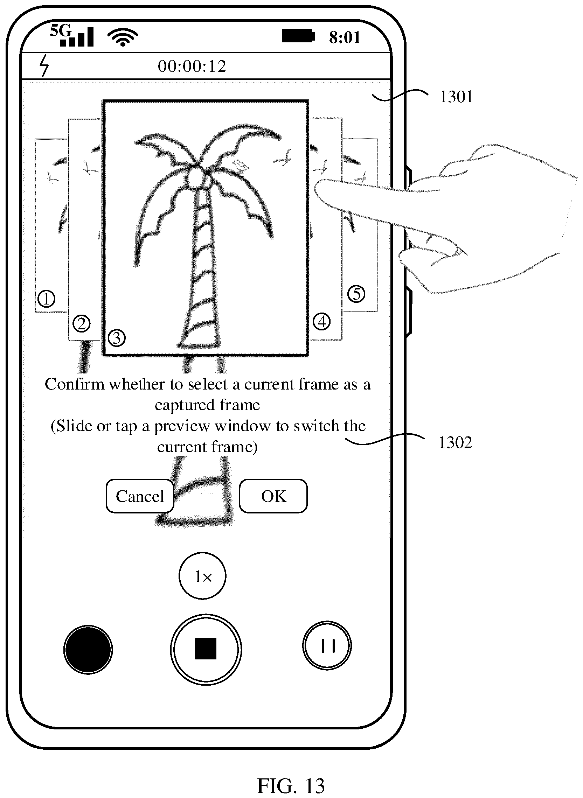

In some embodiments, the second screen may further include second prompt information. The second prompt information is used to prompt the user that the current frame can be switched. For example, as shown in FIG. 13, the second screen 1301 further includes second prompt information 1302, for example "Slide or tap the preview window to switch the current frame".

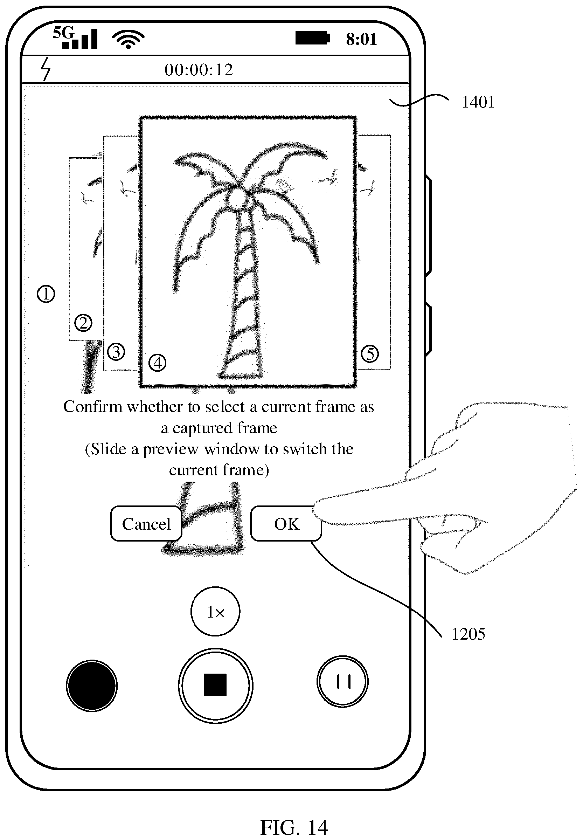

In some embodiments, the mobile phone may further receive a selection or tap operation performed **by the** user on the preview window on the second screen to switch the current frame. For example, the mobile phone may display a second screen 1401 shown in FIG. 14 in response to a tap operation performed by the user on the preview window of the first image ④ shown in FIG. 13 or in response to a sliding operation from the right to the left performed by the user for sliding the preview window. On the second screen 1401, the mobile phone displays the preview window of the first image ④ by using the preset mark. The mobile phone responds to the tap operation performed by the user on the "OK" button 1205, which indicates that the user selects the preview window of the first image ④, and the mobile phone may use the first image ④ as the second image selected by the user.

Correspondingly, after S 1202, in S605, when running the preset RAW domain image processing algorithm, the mobile phone may use the second image selected by the user as the captured frame, and perform image quality enhancement on the captured frame (namely, a reference frame) by using images in the m frames of first images other than the second image selected by the user to obtain the third image.

It should be noted that marks such as ①, ②, ③, ④, and ⑤ may not be displayed in the preview window shown in FIG. 12, FIG. 13, or FIG. 14. These marks are merely used to distinguish different first images, and are not intended to limit implementation of the solution in the embodiment of this application.

In some embodiments, after performing S604, the mobile phone may perform S1201. Within preset duration after the mobile phone displays the second screen, if the mobile phone does not receive a selection operation performed by the user on any preview window on the second screen, the mobile phone may automatically exit the second screen and display a video viewfinder screen. In addition, the mobile phone may perform S605, and use the second image automatically selected by the mobile phone as the captured frame. Within the preset duration after the mobile phone displays the second screen, if the mobile phone receives the selection operation performed by the user on the any preview window on the second screen, the mobile phone may perform S1202 and subsequent operations.

In this embodiment, the user may select the captured frame (namely, the second image) from the n frames of first images. In this way, the captured image that meets the user requirement may be obtained.

Some other embodiments of this application provide an electronic device, and the electronic device may include the display, the camera, the memory, and the one or more processors above. The display, the camera, and the memory are coupled to the processor. The memory is configured to store computer program code, and the computer program code includes computer instructions. When the processor executes the computer instructions, the electronic device can perform the functions or steps performed by the mobile phone in the foregoing method embodiments. For a structure of the electronic device, refer to the structure of the mobile phone shown in FIG. 5A.

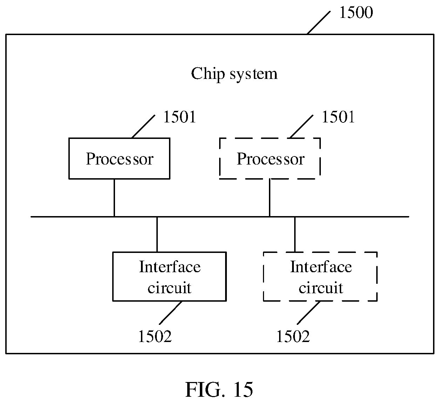

An embodiment of this application further provides a chip system. As shown in FIG. 15, the chip system 1500 includes at least one processor 1501 and at least one interface circuit 1502. The processor 1501 and the interface circuit 1502 may be connected to each other through a line. For example, the interface circuit 1502 may be configured to receive a signal from another apparatus (for example, a memory of an electronic device). In another example, the interface circuit 1502 may be configured to send a signal to another apparatus (for example, the processor 1501). For example, the interface circuit 1502 may read instructions stored in a memory, and send the instructions to the processor 1501. When the instructions are executed by the processor 1501, the electronic device can be enabled to perform the steps in the foregoing embodiments. Certainly, the chip system may further include another discrete device. This is not specifically limited in this embodiment of this application.

An embodiment of this application further provides a computer storage medium. The computer storage medium includes computer instructions. When the computer instructions are run on the foregoing electronic device, the electronic device is enabled to perform the functions or steps performed by the mobile phone in the foregoing method embodiments.

An embodiment of this application further provides a computer program product. When the computer program product runs on a computer, the computer is enabled to perform the functions or steps performed by the mobile phone in the foregoing method embodiments.

The foregoing descriptions about implementations allow a person skilled in the art to clearly understand that, for the purpose of convenient and brief description, division of the foregoing functional modules is used only as an example for illustration. In actual application, the foregoing functions can be allocated to different functional modules and implemented according to needs, that is, an internal structure of an apparatus is divided into different functional modules to implement all or some of the functions described above.

In several embodiments provided in this application, it should be understood that the disclosed apparatus and method may be implemented in another manner. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one physical unit or a plurality of physical units, that is, may be located in one place, or may be distributed in a plurality of different places. Some or all of the units may be selected based on actual needs to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or a part of the technical solutions may be implemented in a form of a software product. The software product is stored in a storage medium and includes several instructions for instructing a device (which may be a single-chip computer, a chip, or the like) or a processor (processor) to perform all or some of the steps of the methods described in the embodiments of this application. The foregoing storage medium includes: any medium that can store program code, such as a USB flash drive, a removable hard disk, a read only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A method for capturing an image during video recording, applied to an electronic device, wherein the method comprises:
receiving (S601), by the electronic device, a first operation of a user, wherein the first operation is used to trigger the electronic device to start recording a video;
collecting (S602), by a camera of the electronic device, a first image in response to the first operation, and displaying, by the electronic device, a first screen, wherein the first screen is a viewfinder screen on which the electronic device is recording a video, the first screen comprises a preview image obtained based on the first image, the first screen further comprises a snapshot shutter, and the snapshot shutter is configured to trigger the electronic device to capture an image to obtain a photo;
buffering (S603), by the electronic device in a first buffer queue, the first image collected by the camera, wherein n frames of first images collected by the camera are buffered in the first buffer queue, n≥2, and n is an integer;
selecting (S604), by the electronic device based on additional information of the first image in response to a second operation performed by the user on the snapshot shutter, a second image from the n frames of first images buffered in the first buffer queue, wherein the additional information of the first image comprises at least one of contrast of the first image, and an angular velocity at which the camera collects the first image; and
running (S605) a preset raw domain image processing algorithm, by the electronic device by using m frames of first images that are in the n frames of first images and that comprise the second image as an input, to obtain a third image, and encoding the third image to generate a captured photo, wherein m≥2, m is an integer, and the preset RAW domain image processing algorithm has a function of improving image quality,
wherein running (S605) the preset RAW domain image processing algorithm comprises performing long-short frame fusion in a high dynamic range scenario, the m frames and a plurality of long and short frames are used as the input for the long-short frame fusion, and the long and short frames are additionally exposed and output by an image sensor of the camera and comprise a long-exposure long frame and a short-exposure short frame.

2. The method according to claim 1, wherein the additional information of the first image comprises the contrast of the first image, and the contrast of the first image is used to represent a definition of the first image; and
the second image is a first image with highest contrast among the n frames of first images buffered in the first buffer queue.

3. The method according to any one of claims 1 to 2, wherein the additional information of the first image comprises the angular velocity at which the camera collects the first image, and the angular velocity is used to represent a jitter situation when the camera collects the first image; and
the second image is a first image with a minimum angular velocity in the n frames of first images buffered in the first buffer queue.

4. The method according to any one of claims 1 to 3, wherein the additional information of the first image further comprises a timestamp of the first image, each frame of first image comprises a timestamp, and the timestamp records a time at which an image sensor of the electronic device outputs a corresponding first image;
a clock of an upper-layer application in the electronic device is synchronized with a clock of the image sensor that records output of the first image, or the clock of the upper-layer application in the electronic device and the clock of the image sensor that records output of the first image are a same system clock; and
the second image is a first image that is in the n frames of first images buffered in the first buffer queue and whose time recorded by the timestamp is closest to a time at which the electronic device receives the second operation.

5. The method according to any one of claims 1 to 4, wherein the m frames of first images are adjacent m frames of images.

6. The method according to any one of claims 1 to 5, wherein before the buffering, by the electronic device in a first buffer queue, the first image collected by the camera, the method further comprises:
counting, by the electronic device, the additional information of the first image when reading each frame of first image output by the image sensor of the electronic device by using an ISP, and writing the additional information of the first image into metadata of the first image.

7. The method according to any one of claims 1 to 5, wherein after the buffering, by the electronic device in a first buffer queue, the first image collected by the camera, the method further comprises:
counting, by the electronic device, the additional information of the first image when reading each frame of first image buffered in the first buffer queue by using an ISP, and writing the additional information of the first image into metadata of the first image.

8. An electronic device, comprising a touchscreen, a memory, a camera, a display, and one or more processors, wherein the touchscreen, the memory, the camera, and the display are coupled to the processor, the memory stores computer program code, the computer program code comprises computer instructions, and when the computer instructions are executed by the processor, the electronic device is enabled to perform the method according to any one of claims 1 to 7.

9. A computer-readable storage medium, comprising computer instructions, wherein when the computer instructions are run on an electronic device, the electronic device is enabled to perform the method according to any one of claims 1 to 7.

10. A computer program product, wherein when the computer program product runs on a computer, the computer is enabled to perform the method according to any one of claims 1 to 7.

## Patentansprüche

1. Ein Verfahren zum Aufnehmen eines Bildes während der Videoaufnahme, angewendet auf ein elektronisches Gerät, wobei das Verfahren umfasst:
Empfangen (S601) einer ersten Bedienung eines Benutzers durch das elektronische Gerät, wobei die erste Bedienung dazu dient, das elektronische Gerät zum Starten der Videoaufnahme zu veranlassen;
Sammeln (S602) eines ersten Bildes durch eine Kamera des elektronischen Geräts als Reaktion auf die erste Bedienung und Anzeigen eines ersten Bildschirms durch das elektronische Gerät, wobei der erste Bildschirm ein Sucherbildschirm ist, auf dem das elektronische Gerät ein Video aufnimmt, der erste Bildschirm ein Vorschaubild enthält, das basierend auf dem ersten Bild erhalten wurde, der erste Bildschirm ferner einen Schnappschuss-Auslöser umfasst, und der Schnappschuss-Auslöser dazu konfiguriert ist, das elektronische Gerät zum Aufnehmen eines Bildes zu veranlassen, um ein Foto zu erhalten;
Zwischenspeichern (S603) des ersten Bildes, das von der Kamera gesammelt wurde, durch das elektronische Gerät in einer ersten Pufferwarteschlange, wobei n Bilder der ersten Bilder, die von der Kamera gesammelt wurden, in der ersten Pufferwarteschlange zwischengespeichert werden, n≥2, und n eine ganze Zahl ist;
Auswählen (S604) eines zweiten Bildes aus den n Bildern der ersten Bilder, die in der ersten Pufferwarteschlange zwischengespeichert wurden, durch das elektronische Gerät basierend auf zusätzlichen Informationen des ersten Bildes als Reaktion auf eine zweite Bedienung des Benutzers am Schnappschuss-Auslöser, wobei die zusätzlichen Informationen des ersten Bildes mindestens einen der Kontraste des ersten Bildes und eine Winkelgeschwindigkeit, mit der die Kamera das erste Bild sammelt, umfassen; und
Ausführen (S605) eines voreingestellten RAW-Domain-Bildverarbeitungsalgorithmus durch das elektronische Gerät unter Verwendung von m Bildern der ersten Bilder, die in den n Bildern der ersten Bilder enthalten sind und das zweite Bild umfassen, als Eingabe, um ein drittes Bild zu erhalten, und Kodieren des dritten Bildes, um ein aufgenommenes Foto zu erzeugen, wobei m≥2, m eine ganze Zahl ist, und der voreingestellte RAW-Domain-Bildverarbeitungsalgorithmus eine Funktion zur Verbesserung der Bildqualität hat,
wobei das Ausführen (S605) des voreingestellten RAW-Domain-Bildverarbeitungsalgorithmus das Durchführen einer Lang-Kurz-Bildfusion in einem Szenario mit hohem Dynamikbereich umfasst, die m Bilder und eine Vielzahl von langen und kurzen Bildern als Eingabe für die Lang-Kurz-Bildfusion verwendet werden, und die langen und kurzen Bilder zusätzlich von einem Bildsensor der Kamera belichtet und ausgegeben werden und ein langbelichtetes langes Bild und ein kurzbelichtetes kurzes Bild umfassen.

2. Das Verfahren nach Anspruch 1, wobei die zusätzlichen Informationen des ersten Bildes den Kontrast des ersten Bildes umfassen, und der Kontrast des ersten Bildes verwendet wird, um eine Definition des ersten Bildes darzustellen; und
das zweite Bild ein erstes Bild mit dem höchsten Kontrast unter den n Bildern der ersten Bilder ist, die in der ersten Pufferwarteschlange zwischengespeichert wurden.

3. Das Verfahren nach einem der Ansprüche 1 bis 2, wobei die zusätzlichen Informationen des ersten Bildes die Winkelgeschwindigkeit umfassen, mit der die Kamera das erste Bild aufnimmt, und die Winkelgeschwindigkeit verwendet wird, um eine Verwacklungssituation darzustellen, wenn die Kamera das erste Bild aufnimmt; und
das zweite Bild ist ein erstes Bild mit einer minimalen Winkelgeschwindigkeit in den n Bildern der ersten Bilder, die in der ersten Pufferwarteschlange gepuffert sind.

4. Das Verfahren nach einem der Ansprüche 1 bis 3, wobei die zusätzlichen Informationen des ersten Bildes weiterhin einen Zeitstempel des ersten Bildes umfassen, jedes Bild des ersten Bildes umfasst einen Zeitstempel, und der Zeitstempel zeichnet die Zeit auf, zu der ein Bildsensor des elektronischen Geräts ein entsprechendes erstes Bild ausgibt;
eine Uhr einer Anwendung der oberen Ebene im elektronischen Gerät ist mit einer Uhr des Bildsensors synchronisiert, die die Ausgabe des ersten Bildes aufzeichnet, oder die Uhr der Anwendung der oberen Ebene im elektronischen Gerät und die Uhr des Bildsensors, die die Ausgabe des ersten Bildes aufzeichnet, sind dieselbe Systemuhr; und
das zweite Bild ist ein erstes Bild, das sich in den n Bildern der ersten Bilder befindet, die in der ersten Pufferwarteschlange gepuffert sind, und dessen Zeit, die durch den Zeitstempel aufgezeichnet wurde, der Zeit, zu der das elektronische Gerät die zweite Operation empfängt, am nächsten liegt.

5. Das Verfahren nach einem der Ansprüche 1 bis 4, wobei die m Bilder der ersten Bilder benachbarte m Bilder sind.

6. Das Verfahren nach einem der Ansprüche 1 bis 5, wobei vor dem Puffern durch das elektronische Gerät in einer ersten Pufferwarteschlange das erste Bild, das von der Kamera aufgenommen wurde, das Verfahren weiterhin umfasst:
Zählen durch das elektronische Gerät der zusätzlichen Informationen des ersten Bildes beim Lesen jedes Bildes des ersten Bildes, das von dem Bildsensor des elektronischen Geräts durch Verwendung eines ISP ausgegeben wird, und Schreiben der zusätzlichen Informationen des ersten Bildes in die Metadaten des ersten Bildes.

7. Das Verfahren nach einem der Ansprüche 1 bis 5, wobei nach dem Puffern durch das elektronische Gerät in einer ersten Pufferwarteschlange das erste Bild, das von der Kamera aufgenommen wurde, das Verfahren weiterhin umfasst:
Zählen durch das elektronische Gerät der zusätzlichen Informationen des ersten Bildes beim Lesen jedes Bildes des ersten Bildes, das in der ersten Pufferwarteschlange gepuffert ist, durch Verwendung eines ISP, und Schreiben der zusätzlichen Informationen des ersten Bildes in die Metadaten des ersten Bildes.

8. Eine elektronische Vorrichtung, umfassend einen Touchscreen, einen Speicher, eine Kamera, ein Display und einen oder mehrere Prozessoren, wobei der Touchscreen, der Speicher, die Kamera und das Display mit dem Prozessor gekoppelt sind, der Speicher Computerprogrammcodes speichert, der Computerprogrammcodes Computeranweisungen umfasst, und wenn die Computeranweisungen vom Prozessor ausgeführt werden, die elektronische Vorrichtung in der Lage ist, das Verfahren gemäß einem der Ansprüche 1 bis 7 auszuführen.

9. Ein computerlesbares Speichermedium, umfassend Computeranweisungen, wobei, wenn die Computeranweisungen auf einem elektronischen Gerät ausgeführt werden, das elektronische Gerät in der Lage ist, das Verfahren gemäß einem der Ansprüche 1 bis 7 auszuführen.

10. Ein Computerprogrammprodukt, wobei, wenn das Computerprogrammprodukt auf einem Computer ausgeführt wird, der Computer in der Lage ist, das Verfahren gemäß einem der Ansprüche 1 bis 7 auszuführen.

## Revendications

1. Un procédé de capture d'une image pendant l'enregistrement vidéo, appliqué à un dispositif électronique, le procédé comprenant :
recevoir (S601), par le dispositif électronique, une première opération d'un utilisateur, où la première opération est utilisée pour déclencher le dispositif électronique afin de commencer l'enregistrement d'une vidéo ;
collecter (S602), par une caméra du dispositif électronique, une première image en réponse à la première opération, et afficher, par le dispositif électronique, un premier écran, où le premier écran est un écran de viseur sur lequel le dispositif électronique enregistre une vidéo, le premier écran comprend une image de prévisualisation obtenue sur la base de la première image, le premier écran comprend en outre un obturateur instantané, et l'obturateur instantané est configuré pour déclencher le dispositif électronique afin de capturer une image pour obtenir une photo ;
mettre en mémoire tampon (S603), par le dispositif électronique dans une première file d'attente tampon, la première image collectée par la caméra, où n images de première image collectées par la caméra sont mises en mémoire tampon dans la première file d'attente tampon, n≥2, et n est un entier ;
sélectionner (S604), par le dispositif électronique sur la base d'informations supplémentaires de la première image en réponse à une deuxième opération effectuée par l'utilisateur sur l'obturateur instantané, une deuxième image parmi les n images de première image mises en mémoire tampon dans la première file d'attente tampon, où les informations supplémentaires de la première image comprennent au moins l'un des éléments suivants : le contraste de la première image, et une vitesse angulaire à laquelle la caméra collecte la première image ; et
exécuter (S605) un algorithme de traitement d'image dans le domaine brut prédéfini, par le dispositif électronique en utilisant m images de première image qui sont parmi les n images de première image et qui comprennent la deuxième image comme entrée, pour obtenir une troisième image, et encoder la troisième image pour générer une photo capturée, où m≥2, m est un entier, et l'algorithme de traitement d'image dans le domaine brut prédéfini a une fonction d'amélioration de la qualité de l'image,
où exécuter (S605) l'algorithme de traitement d'image dans le domaine brut prédéfini comprend effectuer une fusion de cadres longs et courts dans un scénario à plage dynamique élevée, les m cadres et une pluralité de cadres longs et courts sont utilisés comme entrée pour la fusion de cadres longs et courts, et les cadres longs et courts sont exposés et sortis en supplément par un capteur d'image de la caméra et comprennent un cadre long à exposition longue et un cadre court à exposition courte.

2. Le procédé selon la revendication 1, où les informations supplémentaires de la première image comprennent le contraste de la première image, et le contraste de la première image est utilisé pour représenter une définition de la première image ; et
la deuxième image est une première image avec le contraste le plus élevé parmi les n images de première image mises en mémoire tampon dans la première file d'attente tampon.

3. Le procédé selon l'une quelconque des revendications 1 à 2, dans lequel les informations supplémentaires de la première image comprennent la vitesse angulaire à laquelle la caméra capture la première image, et la vitesse angulaire est utilisée pour représenter une situation de tremblement lorsque la caméra capture la première image ; et
la deuxième image est une première image avec une vitesse angulaire minimale parmi les n images de première image mises en mémoire tampon dans la première file d'attente de mémoire tampon.

4. Le procédé selon l'une quelconque des revendications 1 à 3, dans lequel les informations supplémentaires de la première image comprennent également un horodatage de la première image, chaque trame de première image comprenant un horodatage, et l'horodatage enregistre l'heure à laquelle un capteur d'image du dispositif électronique produit une première image correspondante ;
une horloge d'une application de couche supérieure dans le dispositif électronique est synchronisée avec une horloge du capteur d'image qui enregistre la sortie de la première image, ou l'horloge de l'application de couche supérieure dans le dispositif électronique et l'horloge du capteur d'image qui enregistre la sortie de la première image sont une même horloge système ; et
la deuxième image est une première image parmi les n images de première image mises en mémoire tampon dans la première file d'attente de mémoire tampon et dont l'heure enregistrée par l'horodatage est la plus proche de l'heure à laquelle le dispositif électronique reçoit la deuxième opération.

5. Le procédé selon l'une quelconque des revendications 1 à 4, dans lequel les m images de première image sont m images adjacentes.

6. Le procédé selon l'une quelconque des revendications 1 à 5, dans lequel, avant la mise en mémoire tampon, par le dispositif électronique dans une première file d'attente de mémoire tampon, de la première image capturée par la caméra, le procédé comprend en outre :
compter, par le dispositif électronique, les informations supplémentaires de la première image lors de la lecture de chaque trame de première image produite par le capteur d'image du dispositif électronique à l'aide d'un ISP, et écrire les informations supplémentaires de la première image dans les métadonnées de la première image.

7. Le procédé selon l'une quelconque des revendications 1 à 5, dans lequel, après la mise en mémoire tampon, par le dispositif électronique dans une première file d'attente de mémoire tampon, de la première image capturée par la caméra, le procédé comprend en outre :
compter, par le dispositif électronique, les informations supplémentaires de la première image lors de la lecture de chaque trame de première image mise en mémoire tampon dans la première file d'attente de mémoire tampon à l'aide d'un ISP, et écrire les informations supplémentaires de la première image dans les métadonnées de la première image.

8. Un dispositif électronique, comprenant un écran tactile, une mémoire, une caméra, un affichage et un ou plusieurs processeurs, où l'écran tactile, la mémoire, la caméra et l'affichage sont couplés au processeur, la mémoire stocke un code de programme informatique, le code de programme informatique comprend des instructions informatiques, et lorsque les instructions informatiques sont exécutées par le processeur, le dispositif électronique est capable d'exécuter le procédé selon l'une quelconque des revendications 1 à 7.

9. Un support de stockage lisible par ordinateur, comprenant des instructions informatiques, où lorsque les instructions informatiques sont exécutées sur un dispositif électronique, le dispositif électronique est capable d'exécuter le procédé selon l'une quelconque des revendications 1 à 7.

10. Un produit de programme informatique, où lorsque le produit de programme informatique est exécuté sur un ordinateur, l'ordinateur est capable d'exécuter le procédé selon l'une quelconque des revendications 1 à 7.
